(19) Europäisches Patentamt
European Patent Office
Office européen des brevets

(11) **EP 4 046 796 B1**

(12) **EUROPEAN PATENT SPECIFICATION**

(45) Date of publication and mention
of the grant of the patent:
**01.04.2026   Bulletin 2026/14**

(21) Application number: **21158116.0**

(22) Date of filing: **19.02.2021**

(51) International Patent Classification (IPC):
**B32B 27/08** *(2006.01)*     **B32B 27/18** *(2006.01)*
**B32B 27/20** *(2006.01)*     **B32B 27/22** *(2006.01)*
**B32B 27/30** *(2006.01)*     **B32B 27/32** *(2006.01)*
**C08J 5/18** *(2006.01)*

(52) Cooperative Patent Classification (CPC):
**B32B 27/08; B32B 27/18; B32B 27/20;**
**B32B 27/22; B32B 27/30; B32B 27/32;**
B32B 2250/03; B32B 2250/05; B32B 2250/24;
B32B 2250/246; B32B 2270/00; B32B 2307/30;
B32B 2307/306; B32B 2307/31; B32B 2307/40;
(Cont.)

(54) **HIGH-STIFF ORIENTED POLYETHYLENE FILM FOR SUSTAINABLE PACKAGING**

HOCHFESTER ORIENTIERTER POLYETHYLENFILM FÜR NACHHALTIGE VERPACKUNG

FILM DE POLYÉTHYLÈNE ORIENTÉ À HAUTE RIGIDITÉ POUR UN EMBALLAGE DURABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.08.2022   Bulletin 2022/34**

(73) Proprietors:
• **Abu Dhabi Polymers Co. Ltd (Borouge) LLC
Abu Dhabi (AE)**
• **Borealis GmbH
1020 Vienna (AT)**

(72) Inventors:
• **DAS, Subrata Kumar**
Abu Dhabi (AE)
• **MALMROS, Peter**
Abu Dhabi (AE)
• **SINGH, Raghvendra**
Abu Dhabi (AE)

(74) Representative: **Kador & Partner Part mbB
Corneliusstraße 15
80469 München (DE)**

(56) References cited:
EP-A1- 1 834 986     EP-B1- 2 507 273
EP-B1- 2 860 031     EP-B2- 1 941 998
US-A1- 2006 177 641

(52) Cooperative Patent Classification (CPC): (Cont.)
B32B 2307/406; B32B 2307/408; B32B 2307/516;
B32B 2307/54; B32B 2307/544; B32B 2307/546;
B32B 2307/72; B32B 2307/7244; B32B 2307/7246;
B32B 2307/732; B32B 2307/746; B32B 2439/06;
B32B 2439/70

**Description**

The present invention relates to a uniaxially oriented polyethylene film comprising a multimodal high density polyethylene (HDPE) polymer component, a laminate and an article comprising the polyethylene film, the use of the polyethylene film or the laminate for packaging an article and a food package comprising the polyethylene film or the laminate.

Conventional blown or cast polyethylene films are widely used in flexible packaging, either as stand-alone packaging or lamination films, such as stand-up pouches, detergent pouches, sachets, bags, heavy duty shipping sacks. In conventional flexible packaging, multiple polymers are used to make laminates consisting of polyester (BOPET) or polyamides (BOPA) or polypropylene (BOPP / CPP) as substrates; and blown / cast polyethylene based films as sealants to have better seal integrity. These asymmetric laminates were designed to achieve challenging requirements on Form, Fill & Seal (FFS) lines and shelf life of the products. Substrate films are generally employed for stiffness, optical and barrier-related properties to ensure improved shelf life of packed goods and their subsequent handling and operation especially during packaging on FFS machines. With increased focus on sustainability of laminates, it is very important that the laminates are designed in such a way that they should be recyclable. This brings huge challenge for the whole flexible packaging industry to replace high performance material like BOPET and BOPP with existing or new designed polyethylene films.

If compared to PET, BOPP and BOPA substrates, polyethylene substrates often suffer from lower stiffness, poorer optical properties and poorer heat resistance. Orientation (i.e. stretching) of (substrate) films, such as preparation of machine direction oriented (MDO) films, are one approach to provide stiffness and optical properties to polyethylene films.

Numerous efforts have been made to explore alternative MDO film designs with well-balanced overall performance. However, room for improvements in terms of the above described properties of the substrate films still remains. In response to this growing trend, it is important to improve the polyethylene substrate by using high performance polyethylene resin together with new stretching technologies. Thus, although laminate structures based on high contents of polyethylene and MDO polyethylene film designs are well known, there is a steady need to further improve the properties of polyethylene films to match the performance of the commonly used PET, BOPP and BOPA substrates. US2006177641 relates to uniaxially oriented multilayer film.

It is an object of the present invention to provide a polyethylene film with improved stiffness. It is also an object of the present invention to provide a polyethylene film having the desired combination of properties as outlined above, in particular having superior stiffness with enhanced heat resistance, improved optical properties and preferably also improved barrier properties.

The present invention is based on the surprising finding that such a polyethylene film can be obtained with an oriented film if at least one of the film layers comprises a multimodal high density polyethylene (HDPE) polymer component with specific properties.

The invention therefore provides a uniaxially oriented polyethylene film, comprising multiple layers including an inner surface layer (I), an outer surface layer (O) and a core layer (C),

wherein at least one of the multiple layers is made of a composition comprising from 70 to 100 wt.% of a multimodal high density polyethylene (HDPE) polymer component (PE1), based on the total weight of the respective layer composition, the PE1 component having:

a) a melt flow rate $MFR_2$ of from 0.1 to 2.0 g/10min;
b) a melt flow rate $MFR_5$ of from 1.0 to 5.0 g/10min;
c) a melt flow rate ratio ($MFR_{21}/MFR_2$) of from 30 to 90, the melt flow rates being determined according to ISO 1133;
d) a density of more than or equal to 950 kg/m³; and
e) a molecular weight distribution ($M_w/M_n$) of from 8 to 20, determined according to ISO 16014; and

wherein the polyethylene film has a tensile modulus (1% secant) in machine direction (MD) of at least 1500 MPa, determined according to ASTM D882, and a tensile strength in machine direction (MD) of at least 160 MPa, determined according to ISO 527-3, and wherein the PE1 component is an ethylene copolymer which comprises ethylene monomer and one or more co-monomer(s) selected from the group consisting of alpha-olefins having 4 to 12 carbon atoms.

The polyethylene film of the present invention is characterized by superior stiffness and excellent tensile strength. It has further low haze and excellent gloss, as well as high heat resistance and improved barrier properties. Laminates prepared from the polyethylene film can run smoothly on FFS machines without any significant modification of existing FFS equipment and satisfying customer needs for aesthetic appearance, shelf life and sustainability.

The expression "polyethylene film" denotes a film that comprises or consists of at least one type of ethylene polymer. The polyethylene film may comprise ethylene homopolymers and ethylene copolymers, containing one or more types of comonomers.

Preferably, the polyethylene film comprises at least 85 wt.% of at least one type of ethylene polymer (including ethylene homopolymers and/or ethylene copolymers), based on the total weight of the polyethylene film. More preferably, the polyethylene film comprises from 90 to 100 wt.%, still more preferably from 95 to 100 wt.% and most preferably from 98 to 100 wt.% of at least one type of ethylene polymer, based on the total weight of the polyethylene film.

In a preferred embodiment the polyethylene film consists of ethylene homopolymers and/or ethylene copolymers.

As is understood within the meaning of this disclosure, the polyethylene film and its respective layers and compositions for layer preparation may also comprise additives, stabilizers, processing aids and/or pigments. Examples of such compounds are antioxidants, UV stabilizers, acid scavengers, nucleating agents, anti-blocking agents, slip agents. as well as polymer processing agents (PPA). The compounds may be present in some or only in one layer of the polyethylene film, in the same or different contents. Generally, the compounds are present at 0 to 5 wt.%, based on the weight of the respective composition used for the preparation of the layers or the respective layer of the film.

The percentage (%) is to be understood as weight percentage (wt.%) within the meaning of this disclosure, unless otherwise indicated.

It is also understood within the meaning of this disclosure that the below described embodiments may be combined.

According to the invention, the polyethylene film is uniaxially oriented. A "uniaxially-oriented" film refers to a film that has been stretched in a single direction e.g., in only the machine direction (MD) or in only the transversedirection (TD). Preferably, the film has been stretched in the machine direction (MD), resulting in a machine direction oriented (MDO) film.

Oriented films are produced by orienting (stretching) a non-oriented film by a certain stretch or draw ratio to achieve the final thickness of the oriented film. Orientation can take place in both in-line and off-line stretching lines, preferably in-line stretching is used.

The stretch or draw ratio indicates how many times a film has been stretched up to its original length. For example, if a film has been stretched 3 times, the stretch ratio is 1:3. Usually, the stretch or draw ratio may range from 1:3 to 1:20, such as from 1:4 to 1:18, and preferably from 1:4 to 1:8, such as from 1:5 to 1:6.8.

An effect of stretching (or drawing) is that the thickness of the film is similarly reduced. Thus, a draw ratio of at least 1:3 preferably also means that the thickness of the film is at least three times less than the original film thickness.

Preferably, the thickness of the film before orientation (primary film) is in the range of from 80 to 250 $\mu$m, more preferably 90 to 225 $\mu$m and most preferably 100 to 200 $\mu$m. The thickness of the oriented film is preferably up to 40 $\mu$m, such as in the range of from 10 to 40 $\mu$m, more preferably from 12 to 35 $\mu$m, and most preferably from 15 to 30 $\mu$m.

Unless otherwise indicated, it is referred to the uniaxially oriented polyethylene film when using the expression "polyethylene film" or "film" in this disclosure. The non-oriented polyethylene film is referenced by the expression "primary film". However, many specifications such as the sequence of layers or their thickness distribution or compositions are similar for both the oriented and non-oriented films, and the respective disclosure applies to both films.

The polyethylene film has a tensile modulus (1% secant) in machine direction (MD) of at least 1500 MPa, preferably at least 1600, more preferably at least 1700, even more preferably at least 1800, still more preferably at least 1900 and most preferably at least 2000, such as at least 2100 MPa, determined according to ASTM D882. The polyethylene film may have a tensile modulus (1% secant) in machine direction (MD) of from 1500 to 3500 MPa, more preferably of from 1700 to 3300 MPa and most preferably of from 1800 to 3000 MPa, determined according to ASTM D882.

The polyethylene film has a tensile strength (also tensile stress at break) in machine direction (MD) of at least 160 MPa, preferably at least 170, more preferably at least 180, still more preferably at least 190 MPa and most preferably at least 200, such as at least 210 MPa, determined according to ISO 527-3. The polyethylene film may have a tensile strength in machine direction (MD) of from 150 to 350 MPa, more preferably of from 170 to 330 MPa and most preferably of from 180 to 320 MPa, determined according to ISO 527-3.

The polyethylene film comprises multiple layers including an inner surface layer (I), an outer surface layer (O) and a core layer (C). Preferably, the film further comprises additional layers such as a sub-inner surface layer (I1) and/or a sub-outer surface layer (O1), wherein the sub-inner surface layer (11) is present between the inner surface layer (I) and the core layer (C), and the sub-outer surface layer (O1) is present between the outer surface layer (O) and the core layer (C). Optionally, the film comprises more than one of any of the layers O, O1, C, I1 or I.

The polyethylene film preferably comprises, or consists of, from 3 to 9 layers, more preferably from 3 to 7 layers, and most preferably from 4 to 6 layers, such as 5 layers.

The polyethylene film may be symmetric or asymmetric. A symmetric film is one in which the layers, from the outermost layer to inward layer, comprise equal layer compositions on each side of the film. Symmetric films may be preferred due to their ease of manufacturing and equal properties from both sides. Asymmetric films may be preferred for some applications where selected properties of the inner surface layer may differ from those of the outer surface layer.

Examples of possible film layer sequences are: I/I1/C/I1/I, O/O1/C/I1/I, O/O/O1/C/I1/I/I; I/I/I1/C/I1/I/I; O/O1/O1/-C/I1/I1/I; I/I1/I1/C/I1/I1/I; O/O/C/C/C/I/I; I/I/C/C/C/I/I; O/O/O1/O1/C/I1/I1/I/I; I/I/I1/I1/C/I1I1/I/I.

In a preferred embodiment of the invention, the film is a symmetric film comprising 5 layers with the sequence of layers: I/I1/C/I1/I.

In a further preferred embodiment of the invention, the film is an asymmetric film comprising 5 layers with the sequence of layers: O/O1/C/I1/I.

The layers in the oriented film may have similar or different thickness, preferably ranging from 1 to 15 $\mu$m. The layer thickness distribution of multilayer films has influence on both the processability and the performance of the film. For examples, the thickness of the external layers, such as the inner surface layer (I), may influence heat resistance of the film and optical properties (e.g. gloss), whereas the thickness of all layers, such as the core layer (C), may have influence on the mechanical properties of the film. Bubble stability and stretchability of a multilayer film may be influenced by the thickness of the core layer (C). Further, the thickness of the layer comprising the PE1 component may have an impact on the overall mechanical properties of the film, in particular stiffness and tensile modulus, and also on optical properties of the film.

The thickness of each of the layers O, I, C, O1, I1, independently of each other, preferably makes from 5 to 40% of the total thickness of the film.

The thickness of the outer surface layer (O) preferably makes up to 20%, more preferably from 5 to 20%, and most preferably from 8 to 15% of the total thickness of the film.

The thickness of the inner surface layer (I) preferably makes at least 10%, more preferably from 10 to 40%, and most preferably from 10 to 35% of the total thickness of the film.

Layer thickness distribution of the non-oriented (primary) film is usually the same as the layer thickness distribution of the oriented film.

In one embodiment, the thickness of the inner surface layer (I) of the oriented film is at least 2 $\mu$m, preferably at least 3, more preferably at least 4, still more preferably at least 5 and most preferably at least 6 $\mu$m. Preferably, the inner surface layer (I) thickness is up to 15 $\mu$m, more preferably up to 12, still more preferably up to 10 and most preferably up to 8, such as up to 7 $\mu$m.

The polyethylene film preferably has a density of from 935 to 965 kg/m$^3$, more preferably of from 940 to 960 kg/m$^3$. Density of the film may also correlate with mechanical properties of the film.

*PE1 component*

At least one of the multiple layers is made of a composition comprising from 70 to 100 wt.% of a multimodal high density polyethylene (HDPE) polymer component (PE1), preferably from 90 to 100 wt.%, more preferably from 95 to 100 wt.%, still more preferably from 98 to 100 wt.% and most preferably from 99 to 100 wt.% of the PE1 component, based on the total weight of the respective layer composition.

The PE1 component has a melt flow rate MFR$_2$ of from 0.1 to 2.0 g/10min, preferably from 0.3 to 1.5 g/10min, more preferably from 0.5 to 1.2 g/10min and most preferably from 0.5 to 0.9 g/10min.

The PE1 component has a melt flow rate MFR$_5$ of from 1.0 to 5.0 g/10min, preferably 1.3 to 4.5 g/10min, more preferably 1.7 to 4.0 g/10min and most preferably, 2.0 to 3.5 g/10min.

The PE1 component has a (melt) flow rate ratio FRR$_{21/2}$ (MFR$_{21}$/MFR$_2$) of from 30 to 90, preferably from 35 to 85 and most preferably from 40 to 80. All melt flow rates are determined according to ISO 1133.

The PE1 component has a density of more than or equal to 950 kg/m$^3$, preferably more than or equal to 951, more preferably more than or equal to 953 and most preferably more than or equal to 955, such as more than or equal to 956 kg/m$^3$. Usually, the PE1 component has a density of up to 970, preferably up to 969, more preferably up to 968 and most preferably up to 967 kg/m$^3$.

The PE1 component has a molecular weight distribution (M$_w$/M$_n$) of from 8 to 20, more preferably from 9 to 18 and most preferably from 10 to 15, determined according to ISO 16014.

The multimodal high density polyethylene (HDPE) polymer component (PE1) is preferably a bimodal HDPE. High density polyethylenes (HDPE) are well known in the art and are produced in polymerization processes using a catalyst.

The HDPE preferably has a density of from 955 to 968 kg/m$^3$, more preferably of from 958 to 965 kg/m$^3$. Such multimodal HDPE and their production are, for example, described in WO 2020/109289, pages 19 to 28, to which it is referred.

The HDPE is an ethylene copolymer. An ethylene copolymer is a polymer which comprises ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the HDPE is a copolymer of ethylene and 1-butene, 1-hexene or 1-octene, most preferably 1-butene.

In a particularly preferred embodiment, the HDPE comprises, or consists of, a lower molecular weight (LMW) component and a higher molecular weight (HMW) component; wherein the LMW component is an ethylene homopolymer having a density of from 965 to 975 kg/m³ and the HMW component is an ethylene copolymer of ethylene with at least one $C_4$ to $C_{12}$ alpha-olefin, having a density of from 935 to 955 kg/m³.

Preferably, the total amount of comonomers present in the HDPE is of from 0.0 to 0.40 mol%, more preferably from 0.01 to 0.30 mol%, and most preferably from 0.02 to 0.20 mol%.

Preferably, the HDPE has an $MFR_2$ of from 0.25 to 1.8 g/10min, more preferably from 0.3 to 1.5 g/10min, still more preferably from 0.4 to 1.0 g/10min, and most preferably from 0.5 to 0.9 g/10min.

In particularly preferred embodiments, the HDPE has an $MFR_2$ of from 0.5 to 0.9 g/10min, and/or an $MFR_5$ of from 2.0 to 3.5 g/10min and/or an $MFR_{21}$ of from 30 to 60 g/10min, and/or a density of from 958 to 965 kg/m³, and/or a molecular weight distribution (MWD) of from 10 to 15, and/or an $M_n$ of from 7 to 12 kg/mol, and/or an $M_w$ of from 90 to 165 kg/mol, and/or an $MFR_{21}/MFR_2$ ratio ($FRR_{21/2}$) of from 40 to 80 and/or an $MFR_{21}/MFR_5$ ratio ($FRR_{21/5}$) of from 10 to 25.

For all catalytically produced polymers described herein, all molecular weight parameters are measured by the GPC conventional method as further described in detail below. Comonomer content is measured by NMR spectroscopy as further described below.

As the multimodal HDPE component, resin Borstar FB5600 as produced by Borouge may be used.

At least one of the multiple layers of the polyethylene film is made of a composition comprising the PE1 component. Thus, the PE1 component is present in at least one of the multiple layers of the polyethylene film. Preferably, the PE1 component is present in at least 2, more preferably at least 3, such as at least 4 layers of the polyethylene film. The PE1 component may be present in all layers of the film, thus, depending on the film structure, in 5, 6, 7, 8 or 9 layers of the polyethylene film. The contents of the PE1 component in the respective layers may be the same or different.

The PE1 component may be present in any one or all of the inner surface layer (I), outer surface layer (O), core layer (C), sub-inner surface layer (11) and/or sub-outer surface layer (O1). For example, the PE1 component is present in layers I and O1, or layers I and O, or layers I and C, or layers O and C, or layers O and I1, or layers I, C and O.

Preferably, the PE1 component is at least present in the inner surface layer (I). In a particular embodiment of a symmetric polyolefin film, the PE1 component is at least present in both inner surface layers (I).

The PE1 component may influence the mechanical properties of the polyethylene film, in particular stiffness and tensile modulus. Accordingly, depending on the required mechanical properties, the presence of the PE1 component in the layers and/or its content may be adjusted. To confer stiffness to the film, it may be used in any of the layers I, I1, C, O1 and/or O.

As the PE1 component provides great heat seal properties and optical properties such as gloss, it confers particularly good effects when used in the inner surface layer (I) and/or outer surface layer (O).

In a preferred embodiment, the PE1 component is used at least in the layers I and O.

In one embodiment, the PE1 component is used at least in the layers I and O1.

In one embodiment, the PE1 component is used at least in the layers I and C.

Preferably, the content of the PE1 component in the polyethylene film is in the range of from 35 to 80 wt.%, more preferably from 40 to 75 wt.%, based on the total weight of the polyethylene film.

At least one of the multiple layers of the polyethylene film is made of a composition comprising from 70 to 100 wt.%, preferably from 90 to 100 wt.%, more preferably from 95 to 100 wt.%, still more preferably from 98 to 100 wt.% and most preferably from 99 to 100 wt.% of the PE1 component, based on the total weight of the respective layer composition.

Preferably, the inner surface layer (I) and/or the outer surface layer (O) are made of a composition comprising from 70 to 100 wt.% of the PE1 component, based on the total weight of the composition, wherein the contents of the PE1 components may be the same or different.

One of the highest heat resistance among all polyethylene films was achieved by using the PE1 component in at least one of the surface layers (I) or (O). This significantly helps to run polyethylene laminates on a high speed vertical Form, Fill & Seal (FFS) packaging line. Highly improved optical properties (haze and gloss) are achieved if at least one of the surface layers (I) or (O) comprises the PE1 component, preferably with at least 80 wt.%, based on the total weight of the respective layer.

Preferably, the inner surface layer (I) is made of a composition comprising from 90 to 100 wt.% of the PE1 component, more preferably from 95 to 100 wt.%, still more preferably from 98 to 100 wt.% and most preferably from 99 to 100 wt.% of the PE1 component, based on the total weight of the composition of the inner surface layer (I).

In one embodiment, the outer surface layer (O) is made of a composition comprising from 90 to 100 wt.% of the PE1 component, more preferably from 95 to 100 wt.%, still more preferably from 98 to 100 wt.% and most preferably from 99 to 100 wt.% of the PE1 component, based on the total weight of the composition of the outer surface layer (O).

In one embodiment, both the inner surface layer (I) and the outer surface layer (O) are made of a composition comprising from 90 to 100 wt.% of the PE1 component, more preferably from 95 to 100 wt.%, still more preferably from 98 to 100 wt.% and most preferably from 99 to 100 wt.% of the PE1 component, based on the total weight of the composition of the respective layer, wherein the contents of the PE1 components are the same or different.

In one embodiment, the inner surface layer (I) and/or the outer surface layer (O1) are made of a composition comprising from 90 to 100 wt.% of the PE1 component, more preferably from 95 to 100 wt.%, still more preferably from 98 to 100 wt.% and most preferably from 99 to 100 wt.% of the PE1 component, based on the total weight of the composition of the respective layer, wherein the contents of the PE1 components are the same or different.

### PE2 component

In one embodiment of the film, at least one of the multiple layers is made of a composition comprising from 1 to 40 wt.%, preferably from 5 to 30 wt.%, of a linear low density polyethylene (LLDPE) component (PE2), based on the total weight of the respective layer composition. Linear low density polyethylenes (LLDPE) are well known in the art and are produced in polymerization processes using a catalyst.

The PE2 component is preferably an ethylene copolymer, preferably a multimodal ethylene copolymer, preferably having a density of from 910 $kg/m^3$ to 925 $kg/m^3$ and an $MFR_2$ of from 0.5 to 2.0 g/10min.

Preferably, the ethylene copolymer has a ratio $MFR_{21}/MFR_2$ of from 13 to 30 and an MWD of 6 or less.

Preferably, the ethylene copolymer comprises, or consists of, a multimodal polymer of ethylene with one or more comonomers selected from alpha-olefins having from 4 to 10 carbon atoms, which has a ratio $MFR_{21}/MFR_2$ of from 13 to 30 and an MWD of 6 or less.

Such multimodal ethylene copolymers are disclosed, for example, in WO 2016/083208.

The multimodal ethylene copolymer preferably has an $MFR_2$ in the range of from 0.6 to 2.5 g/10min, and particularly preferred from 1.2 to 1.8 g/10min.

Preferably, the multimodal ethylene copolymer has a density of from 910 to 925 $kg/m^3$, more preferably from 913 to 922 $kg/m^3$ and most preferably from 915 to 920 $kg/m^3$.

The multimodal ethylene copolymer preferably has a ratio $MFR_{21}/MFR_2$ of from 13 to 30, more preferably of from 15 to 25.

The multimodal ethylene copolymer preferably has an MWD of 6 or less and usually more than 1, more preferably of from 3 to 5.

The alpha-olefin comonomers having from 4 to 10 carbon atoms of the multimodal ethylene copolymer are preferably 1-butene and/or 1-hexene.

Preferably, the total amount of comonomers present in the multimodal ethylene copolymer is from 0.5 to 10 mol%, preferably from 1.0 to 8 mol%, more preferably from 1.0 to 5 mol%, still more preferably from 1.5 to 5.0 mol% and most preferably from 2.5 to 4.0 mol%.

In a particularly preferred embodiment, the multimodal ethylene copolymer is a bimodal copolymer, i.e. comprises a low molecular weight and a high molecular weight component, and has an $MFR_2$ of from 1.2 to 1.8 g/10min, and/or an $MFR_5$ of from 3.0 to 5.0 g/10min and/or an $MFR_{21}$ of from 20 to 40 g/10min, and/or a density of from 915 to 920 $kg/m^3$, and/or a molecular weight distribution (MWD) of from 3.0 to 5.0, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25 and/or an $MFR_{21}/MFR_5$ ratio ($FRR_{21/5}$) of from 6 to 9.

In a further preferred embodiment, the ethylene copolymer comprises, or consists of, an ethylene terpolymer, more preferably a multimodal ethylene terpolymer (III).

Preferably, the multimodal ethylene terpolymer (III) is an ethylene terpolymer having a density of from 910 $kg/m^3$ to 925 $kg/m^3$ and an $MFR_2$ of from 0.5 to 2.0 g/10min.

The multimodal ethylene terpolymer (III) preferably comprises, or consists of, a multimodal polymer of ethylene with at least two different comonomers selected from alpha-olefins having from 4 to 10 carbon atoms, which has a ratio $MFR_{21}/MFR_2$ of from 13 to 30 and an MWD of 5 or less.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in WO 2016/083208 which have a density in the range a density of from 910 to 925 $kg/m^3$ are also preferred embodiments of the multimodal ethylene terpolymer (III) in the present application, whether or not explicitly described herein.

The multimodal ethylene terpolymer (III) preferably has an $MFR_2$ in the range of from 0.6 to 2.5 g/10min, and particularly preferred from 1.2 to 1.8 g/10min.

Preferably, the multimodal ethylene terpolymer (III) has a density of from 910 to 925 $kg/m^3$, more preferably of from 913 to 922 $kg/m^3$, and particularly preferred of from 915 to 920 $kg/m^3$.

The multimodal ethylene terpolymer (III) preferably has a ratio $MFR_{21}/MFR_2$ of from 13 to 30, more preferably of from 15 to 25.

The at least two alpha-olefin comonomers having from 4 to 10 carbon atoms of the multimodal ethylene terpolymer (III) are preferably 1-butene and 1-hexene.

Preferably, the total amount of comonomers present in the multimodal ethylene terpolymer (III) is from 0.5 to 10 mol%, preferably from 1.0 to 8 mol%, more preferably from 1.0 to 5 mol%, still more preferably from 1.5 to 5.0 mol% and most preferably from 2.5 to 4.0 mol%.

The multimodal ethylene terpolymer (III), which preferably is a bimodal terpolymer, preferably comprises, or consists of, an ethylene polymer component (A) and an ethylene polymer component (B), wherein the ethylene polymer component (A) has higher $MFR_2$ than the ethylene polymer component (B).

More preferably, the ethylene polymer component (A) has an $MFR_2$ of from 1 to 50 g/10min, preferably of from 1 to 40 g/10min, more preferably of from 1 to 30 g/10min, even more preferably of from 2 to 20 g/10min, still more preferably of from 2 to 15 g/10min and most preferably of from 2 to 10 g/10min.

The ratio of the $MFR_2$ of ethylene polymer component (A) to the $MFR_2$ of the ethylene polymer component (B) is from 2 to 50 g/10min, preferably from 5 to 40, more preferably from 10 to 30, still more preferably from 10 to 25 and most preferably from 11 to 25 g/10min.

Preferably, the ethylene polymer component (A) comprises a different comonomer than the ethylene polymer (B).

Preferably, the ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal ethylene terpolymer] is of from 0.10 to 0.60, preferably of from 0.15 to 0.50.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

Preferably, the ethylene polymer component (A) has different, preferably higher, density than the density of the ethylene polymer component (B).

The density of the ethylene polymer component (A) is preferably from 925 to 950 kg/m$^3$, more preferably from 930 to 945 kg/m$^3$.

Preferably, the multimodal ethylene terpolymer (III) comprises the ethylene polymer component (A) in an amount of from 30 to 70 wt.%, preferably from 40 to 60 wt.%, more preferably from 35 to 50 wt.%, still more preferably from 40 to 50 wt.%; and the ethylene polymer component (B) in an amount of from 70 to 30 wt.%, preferably from 60 to 40 wt.%, more preferably from 50 to 65 wt.%, still more preferably from 50 to 60 wt.%, based on the total amount (100 wt.%) of the multimodal ethylene terpolymer (III).

Most preferably, the multimodal ethylene terpolymer (III) consists of the ethylene polymer components (A) and (B) as the sole polymer components. Accordingly, the split between ethylene polymer component (A) to ethylene polymer component (B) is (30 to 70):(70 to 30), preferably (40 to 60):(60 to 40), more preferably (35 to 50):(65 to 50) and most preferably (40 to 50):(50 to 60).

In a particularly preferred embodiment, the multimodal ethylene terpolymer (III) is a bimodal terpolymer, i.e. comprises a low molecular weight and a high molecular weight component, and has an $MFR_2$ of from 1.2 to 1.8 g/10min, and/or an $MFR_5$ of from 3.0 to 5.0 g/10min and/or an $MFR_{21}$ of from 20 to 40 g/10min, and/or a density of from 915 to 920 kg/m$^3$, and/or a molecular weight distribution (MWD) of from 3.0 to 5.0, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25 and/or an $MFR_{21}/MFR_5$ ratio ($FRR_{21/5}$) of from 6 to 9.

Preferred as multimodal ethylene terpolymers (III) are also such commercially available as Anteo™ from Borealis or Borouge having the properties as required herein, especially Anteo™ FK1828 or Anteo™ FK1820.

In one embodiment, the PE2 component is present in at least one of the multiple layers of the polyethylene film, preferably, the PE2 component is present in at least 2, more preferably at least 3, such as at least 4 layers of the polyethylene film. The PE2 component may be present in all layers of the film, thus, depending on the film structure, in 5, 6, 7, 8 or 9 layers of the polyethylene film. The contents of the PE2 component in the respective layers may be the same or different.

The PE2 component may be present in any or all of the inner surface layer (I), outer surface layer (O), core layer (C), sub-inner surface layer (11) and/or sub-outer surface layer (O1). For example, the PE2 component is present in layers I1 and O, or layers I1 and O1, or layers I1 and C, or layers I1, C and O, or layers I1, O1 and O, or layers I1, C, O1 and O.

Preferably, the PE2 component is at least present in layers C and O and optionally I1.

In one embodiment, the PE2 component is not present in the inner surface layer (I).

The PE2 component may have influence on the bubble stability and stretchability of the polyethylene film.

In one embodiment, at least one of the multiple layers is made of a composition comprising from 5 to 40 wt.% of the PE2 component, preferably from 10 to 30 wt.% and more preferably from 15 to 27 wt.% of the PE2 component, based on the total weight of the respective layer composition.

Preferably, the core layer (C) is made of a composition comprising from 1 to 40 wt.% of the PE2 component, more preferably from 5 to 40 wt.%, still more preferably from 10 to 30 wt.% and most preferably from 15 to 27 wt.% of the PE2 component, based on the total weight of the composition of the core layer (C).

Preferably, the outer surface layer (O) is made of a composition comprising from 1 to 40 wt.% of the PE2 component, more preferably from 5 to 40 wt.%, still more preferably from 10 to 30 wt.% and most preferably from 15 to 27 wt.% of the PE2 component, based on the total weight of the composition of the outer surface layer (O).

Preferably, both the core layer (C) and the outer surface layer (O) are made of a composition comprising from 1 to 40 wt.% of the PE2 component, more preferably from 5 to 40 wt.%, still more preferably from 10 to 30 wt.% and most preferably from 15 to 27 wt.% of the PE2 component, based on the total weight of the composition of the respective layer, wherein the contents of the PE2 component are the same or different.

In one embodiment, at least one of the multiple layers is made of a composition comprising from 1 to 15 wt.% of the PE2 component, preferably from 2 to 10 wt.% and more preferably from 3 to 7 wt.% of the PE2 component, based on the total weight of the respective layer composition.

Preferably, the sub-inner surface layer (I1) and/or the sub-outer surface layer (O1) are made of a composition comprising from 1 to 15 wt.% of the PE2 component, preferably from 2 to 10 wt.% and more preferably from 3 to 7 wt.% of the PE2 component, based on the total weight of the composition of the respective layer, wherein the contents of the PE2 component are the same or different.

### PE3 component

In one embodiment, at least one of the multiple layers is made of a composition comprising from 60 to 100 wt.%, preferably from 70 to 95 wt.%, of a multimodal polyethylene component (PE3), based on the total weight of the respective layer composition, having a density of from 925 to 945 kg/m$^3$ and preferably a melt flow rate (MFR$_2$) of from 0.05 to 0.5 g/10min, determined according to ISO 1133.

The multimodal polyethylene PE3 component is a multimodal linear medium density polyethylene MDPE, preferably a bimodal MDPE. Middle density polyethylenes (MDPE) are well known in the art and are produced in polymerization processes using a catalyst.

Such multimodal MDPE and their production are, for example, described in WO 2017/021389 A1 for linear ethylene polymers, pages 8 to 10, to which it is referred.

Preferably, the MDPE component comprises an ethylene copolymer. An ethylene copolymer is a polymer which comprises ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the MDPE is a copolymer of ethylene and 1-butene or 1-hexene, most preferred 1-butene.

Preferably, the MDPE component comprises, or consists of, an ethylene copolymer. The comonomer can be alpha-olefins having 4 to 12 carbon atoms, e.g. 1-butene, 4-methyl-l-pentene, 1-hexene, 1-octene, 1-decene. More preferably, the MDPE comprises, or consists of, a copolymer of ethylene and 1-butene or 1-hexene, most preferably 1-butene.

Preferably, the total amount of comonomers present in the MDPE of component PE3 is of from 1.0 to 4.0 mol%, more preferably from 1.5 to 3.8 mol% and most preferably from 1.8 to 3.5 mol%.

Preferably, the PE3 component has a molecular weight distribution MWD ($M_w/M_n$) of from 5 to 40, more preferably from 10 to 35, determined according to ISO 16014.

Preferably, the PE3 component has a density of from 926 to 945 kg/m$^3$, more preferably 930 to 940 kg/m$^3$, and most preferably from 932 to 938 kg/m$^3$.

The PE3 component preferably has an MFR$_2$ in the range of from 0.05 to 0.4 g/10min, and particularly preferred from 0.1 to 0.2 g/10min.

Preferably, the PE3 component has an MFR$_5$ of from 0.40 to 0.80 g/10min.

Preferably, the PE3 component has an MFR$_{21}$ of from 10 to 20 g/10min.

Preferably, the PE3 component has a melt flow rate ratio FRR$_{21/2}$ (MFR$_{21}$/MFR$_2$) of from 40 to 170, preferably from 60 to 150.

Preferably, the PE3 component has a melt flow rate ratio FRR$_{21/5}$ (MFR$_{21}$/MFR$_5$) of from 20 to 30.

In a particularly preferred embodiment, the MDPE component comprises an ethylene copolymer, and has an MFR$_2$ of from 0.05 to 0.5 g/10min, and/or an MFR$_5$ of from 0.40 to 0.80 g/10min and/or an MFR$_{21}$ of from 10 to 20 g/10min, and/or a density of from 925 to 945 kg/m$^3$, and/or a molecular weight distribution (MWD) of from 5 to 40, and/or an MFR$_{21}$/MFR$_2$ ratio (FRR$_{21/2}$) of from 40 to 170 and/or an MFR$_{21}$/MFR$_5$ ratio (FRR$_{21/5}$) of from 20 to 30.

All melt flow rates are determined according to ISO 1133, as described herein below.

As the multimodal MDPE component, resin Borstar FB1350 as produced by Borouge and/or Borealis may be used.

In one embodiment, the PE3 component is present in at least one of the multiple layers of the polyethylene film, preferably, the PE3 component is present in at least 2, more preferably at least 3, such as at least 4 layers of the polyethylene film. The PE3 component may be present in all layers of the film, thus, depending on the film structure, in 5, 6, 7, 8 or 9 layers of the polyethylene film. The contents of the PE3 component in the respective layers may be the same or different.

The PE3 component may be present in any or all of the inner surface layer (I), outer surface layer (O), core layer (C), sub-inner surface layer (11) and/or sub-outer surface layer (O1). For example, the PE3 component is present in layers I1 and O, or layers I1 and O1, or layers I1 and C, or layers I1, C and O, or layers I1, O1 and O, or layers I1, C, O1 and O.

Preferably, the PE3 component is at least present in layers C and O and optionally I1.

In one embodiment, the PE3 component is not present in the inner surface layer (I).

The PE3 component may have influence on the mechanical properties of the polyethylene film, and its presence - in a particular content - may further improve the mechanical properties of the polyethylene film.

Further, improved film bubble stability and superior processability may be achieved by adjusting the content of the PE3 component.

Preferably, the content of the PE3 component in the polyethylene film is in the range of from 10 to 50 wt.%, more preferably from 15 to 45 wt.% and most preferably from 20 to 40 wt.%, based on the total weight of the polyethylene film.

In one embodiment, at least one of the multiple layers is made of a composition comprising from 60 to 90 wt.%, preferably from 65 to 85 wt.% and more preferably from 70 to 80 wt.% of the PE3 component, based on the total weight of the respective layer composition.

Preferably, the core layer (C) is made of a composition comprising from 60 to 90 wt.%, preferably from 65 to 85 wt.% and more preferably from 70 to 80 wt.% of the PE3 component, based on the total weight of the composition of the core layer (C).

Preferably, the outer surface layer (O) is made of a composition comprising from 60 to 90 wt.%, preferably from 65 to 85 wt.% and more preferably from 70 to 80 wt.% of the PE3 component, based on the total weight of the composition of the outer surface layer (O).

Preferably, both the core layer (C) and the outer surface layer (O) are made of a composition comprising from 60 to 90 wt.%, preferably from 65 to 85 wt.% and more preferably from 70 to 80 wt.% of the PE3 component, based on the total weight of the composition of the respective layer, wherein the contents of the PE2 component are the same or different.

In one embodiment, at least one of the multiple layers is made of a composition comprising from 80 to 100 wt.%, preferably from 90 to 98 wt.% and more preferably from 92 to 97 wt.% of the PE3 component, based on the total weight of the respective layer composition.

Preferably, the sub-inner surface layer (11) and/or the sub-outer surface layer (O1) is made of a composition comprising from 80 to 100 wt.%, preferably from 90 to 98 wt.% and more preferably from 92 to 97 wt.% of the PE3 component based on the total weight of the composition of the respective layer, wherein the contents of the PE3 component are the same or different.

### PE4 component

In one embodiment, at least one of the multiple layers is made of a composition comprising from 1 to 30 wt.%, preferably from 5 to 20 wt.%, of a low density polyethylene (LDPE) component (PE4), based on the total weight of the respective layer composition.

Low density polyethylenes (LDPE) are well known in the art and are produced in high pressure processes usually performed in a tubular reactor or an autoclave. Such LDPE and their production are, for example, described in WO 2017/055174, page 9, line 29, to page 12, line 6, to which it is referred.

Preferably, the PE4 component has a molecular weight distribution MWD ($M_w/M_n$) of from 3 to 12, preferably from 5 to 9, determined according the GPC viscosity method described herein.

Preferably, the PE4 component has a density of from 915 to 930 kg/m$^3$, more preferably of from 921 to 925 kg/m$^3$.

The PE4 component preferably has an MFR$_2$ in the range of from 1.2 to 2.9 g/10min, and particularly preferred from 1.6 to 2.4 g/10min.

All molecular weight parameters of LDPE are measured by the GPC viscosity method as further described in detail below.

As the LDPE component, resin FT6230 as produced by Borouge and/or Borealis may be used.

In one embodiment, the PE4 component is present in at least one of the multiple layers of the polyethylene film, preferably, the PE4 component is present in at least 2, more preferably at least 3, such as at least 4 layers of the polyethylene film. The PE4 component may be present in all layers of the film, thus, depending on the film structure, in 5, 6, 7, 8 or 9 layers of the polyethylene film. The contents of the PE4 component in the respective layers may be the same or different.

The PE4 component may be present in any or all of the inner surface layer (I), outer surface layer (O), core layer (C), sub-inner surface layer (11) and/or sub-outer surface layer (O1). For example, the PE4 component is present in layers I1 and O, or layers I1 and O1, or layers I1 and C, or layers I1, C and O, or layers I1, O1 and O, or layers I1, C, O1 and O.

Preferably, the PE4 component is at least present in layers C and O and optionally I1.

In one embodiment, the PE4 component is not present in the inner surface layer (I).

The PE4 component may have influence on the bubble stability and stretchability of the polyethylene film.

In one embodiment, at least one of the multiple layers is made of a composition comprising from 1 to 40 wt.%, preferably from 5 to 30 wt.% and more preferably 5 to 20 wt.% of the PE4 component, based on the total weight of the respective layer composition.

In one embodiment, the core layer (C) is made of a composition comprising from 1 to 40 wt.%, preferably from 5 to 30 wt.% and more preferably from 5 to 20 wt.% of the PE4 component, based on the total weight of the composition of the core layer (C).

In one embodiment, the outer surface layer (O) is made of a composition comprising from 1 to 40 wt.%, preferably from 5 to 30 wt.% and more preferably from 5 to 20 wt.% of the PE4 component, based on the total weight of the composition of the outer surface layer (O).

In one embodiment, both the core layer (C) and the outer surface layer (O) are made of a composition comprising from 1 to 40 wt.%, preferably from 5 to 30 wt.% and more preferably from 5 to 20 wt.% of the PE4 component, based on the total weight of the composition of the respective layer.

In one embodiment, the sub-inner surface layer (I1) and/or the sub-outer surface layer (O1) are made of a composition comprising from 1 to 40 wt.%, preferably from 5 to 30 wt.% and more preferably from 5 to 20 wt.% of the PE4 component, based on the total weight of the composition of the respective layer, wherein the contents of the PE4 component are the same or different.

Any of the multiple layers of the polyolefin film may be made of a composition comprising one or more polyethylene components. According to the invention at least one of the multiple layers is made of a composition comprising from 70 to 100 wt.% of a multimodal high density polyethylene (HDPE) polymer component (PE1), based on the total weight of the respective layer composition.

### Inner surface layer (I)

The inner surface layer (I) may be made of any polyethylene composition. The expression "polyethylene composition" denotes a composition that comprises or consists of at least one type of ethylene polymer. The polyethylene composition may comprise ethylene homopolymers and ethylene copolymers, containing one or more types of comonomers.

Preferably, the polyethylene composition comprises at least 85 wt.% of at least one type of ethylene polymer (including ethylene homopolymers and/or ethylene copolymers), based on the total weight of the polyethylene composition. More preferably, the polyethylene film comprises from 90 to 100 wt.%, still more preferably from 95 to 100 wt.% and most preferably from 98 to 100 wt.% of at least one type of ethylene polymer, based on the total weight of the polyethylene film.

In a preferred embodiment, the polyethylene composition consists of ethylene homopolymers and/or ethylene comonomers.

The inner surface layer (I) may be made of a composition comprising one or more of the PE1, PE2, PE3 and PE4 components described above.

Preferably, the inner surface layer (I) is made of a composition comprising from 70 to 100 wt.% of a multimodal high density polyethylene (HDPE) polymer component (PE1), based on the total weight of the inner surface layer (I) composition.

More preferred, the inner surface layer (I) is made of a composition comprising from 90 to 100 wt.% of the PE1 component, preferably from 95 to 100 wt.%, more preferably from 98 to 100 wt.% and most preferably from 99 to 100 wt.% of the PE1 component, based on the total weight of the inner surface layer (I) composition.

### Outer surface layer (O)

The outer surface layer (O) may be made of any polyethylene composition, as defined above with respect to the inner surface layer (I).

The outer surface layer (O) may be made of a composition of the embodiments as described above with respect to the PE1, PE2, PE3 and PE4 components.

In one embodiment, the outer surface layer (O) is made of a composition comprising from 70 to 100 wt.% of the PE1 component, based on the total weight of the outer surface layer (O) composition.

In one embodiment, the outer surface layer (O) is made of a composition comprising from 90 to 100 wt.% of the PE1 component, preferably from 95 to 100 wt.%, more preferably from 98 to 100 wt.% and most preferably from 99 or 100 wt.% of PE1 component, based on the total weight of the outer surface layer (O) composition.

In one embodiment, the outer surface layer (O) is made of a composition comprising from 60 to 90 wt.%, preferably 65 to 80 wt.%, of the PE3 component. Preferably, the composition further comprises from 10 to 40 wt.%, more preferably 20 to 35 wt.%, of the PE2 component, or from 10 to 40 wt.% , more preferably 20 to 35 wt.%, of the PE1 component, or from 10 to 40 wt.%, more preferably 20 to 35 wt.%, of the PE4 component, based on the total weight of the outer surface layer (O) composition.

In one embodiment, the outer surface layer (O) is made of a composition comprising from 60 to 90 wt.%, preferably from 65 to 80 wt.%, of the PE3 component and from 10 to 40 wt.%, more preferably 20 to 35 wt.%, of a combination of at least two of the components PE2, PE1 and PE4, based on the total weight of the outer surface layer (O) composition.

In one embodiment, the outer surface layer (O) is made of the same composition as the inner surface layer (I).

*Core layer (C)*

The core layer (C) may be made of any polyethylene composition, as defined above with respect to the inner surface layer (I).

The core layer (C) may be made of a composition of the embodiments as described above with respect to the PE1, PE2, PE3 and PE4 components.

In one embodiment, the core layer (C) is made of a composition comprising from 60 to 100 wt.%, preferably from 65 to 95 wt.%, of the PE3 component. Preferably, the composition comprises from 60 to 99 wt.%, more preferably from 65 to 95 wt.%, of the PE3 component and from 1 to 40 wt.%, more preferably from 5 to 35 wt.%, of the PE2 component, or from 1 to 40 wt.%, more preferably from 5 to 35 wt.%, of the PE1 component, or from 1 to 40 wt.%, more preferably from 5 to 35 wt.%, of the PE4 component, based on the total weight of the composition of the core layer (C).

In one embodiment, the core layer (C) is made of a composition comprising from 60 to 99 wt.%, preferably from 5 to 35 wt.%, of the PE3 component and from 1 to 40 wt.%, more preferably from 5 to 35 wt.% of a combination of at least two of the components PE2, PE1 and PE4, based on the total weight of the composition of the core layer (C).

In one embodiment, the core layer (C) comprises a (weight) ratio of the PE3 component to the PE2 component of from 60:40 to 95:5, preferably from 65:35 to 90:10, more preferably from 70:30 to 85:15, such as 75:25.

In one embodiment, the core layer (C) comprises a (weight) ratio of the PE3 component to the PE1 component or the PE4 component of from 60:40 to 95:5, preferably from 65:35 to 90:10, more preferably from 70:30 to 85:15, such as 75:25.

In one embodiment, the core layer (C) comprises a (weight) ratio of the PE3 component to [the PE1 component and the PE2 component] of from 60:40 to 95:5, preferably from 65:35 to 90:10, more preferably from 70:30 to 85:15, such as 75:25.

*Sub-inner surface layer (11) and sub-outer surface layer (O1)*

The polyethylene film may optionally comprise one or more sub-inner surface layers (I1) and one or more sub-outer surface layers (O1).

The sub-inner surface layer (11) and sub-outer surface layer (O1) may be made of any polyethylene composition, as defined above with respect to the inner surface layer (I).

For example, the sub-inner surface layer (11) and/or the sub-outer surface layer (O1) may be made of composition of any conventional LLDPE, HDPE or LDPE.

The sub-inner surface layer (I1) and sub-outer surface layers (O1) may be made of a composition of the embodiments as described above with respect to the PE1, PE2, PE3 and PE4 components and the different layers.

In one embodiment, the sub-outer surface layer (O1) is made of the same composition as the sub-inner surface layer (I1).

In one embodiment, the sub-outer surface layer (O1) is made of the same composition as the outer surface layer (O) or the core layer (C).

In one embodiment, the sub-inner surface layer (11) is made of the same composition as the inner surface layer (I) or the core layer (C).

*Polyethylene film properties*

The polyethylene film has excellent optical properties.

The polyethylene film preferably has a haze of less than 14%, more preferably less than 13 and most preferably less than 12%, determined according to ASTM D1003. Usually, the haze is higher than 1%, preferably higher than 2% and most preferably higher than 5%.

The polyethylene film preferably has a gloss at 60°, preferably at the inner surface layer (I) or the outer surface layer (O), of at least 80, more preferably at least 85 and most preferably at least 90, determined according to ISO 2813. The gloss is given in the gloss units. Usually, the gloss at 60° is not more than 150, preferably not more than 145 and most preferably not more than 140.

The polyethylene film has excellent heat seal properties. For example, the polyethylene film has a high heat seal initiation temperature (SIT) at a force of 5N. The higher the heat seal initiation temperature, the higher the capability of the film to withstand high temperatures during subsequent use, such as on the Form, Fill & Seal (FFS) packaging.

The polyethylene film preferably has a seal initiation temperature (SIT) at 5N, preferably measured on at least one of the inner surface layer (I) or the outer surface layer (O), more preferably at the inner surface layer (I), of greater than or equal to 125°C, preferably greater than or equal to 127°C and most preferably greater than or equal to 130°C, determined according to ASTM F2029 and ASTM F88. Usually, the seal initiation temperature at 5N is not greater than 150°C, more preferably not greater than 145°C and most preferably not greater than 140°C. Higher temperatures are generally not obtained for any polyethylene material.

The polyethylene film has excellent barrier properties.

The polyethylene film preferably has a water vapor transmission rate (WVTR) of less than 10 $g/m^2/d$, more preferably less than 8, still more preferably less than 7, and most preferably less than 6 $g/m^2/d$, determined according to ASTM F1249. Usually, the water vapor transmission rate is more than 0.5, preferably more than 1.0 and most preferably more than 1.5 $g/m^2/d$.

The polyethylene film preferably has an oxygen transmission rate (OTR) of less than 2500 $cm^3/m^2/d$, more preferably less than 2300, even more preferably less than 2200, still more preferably less than 2100 and most preferably less than 2000 $cm^3/m^2/d$, determined according to ASTM D3985. Usually, the oxygen transmission rate is more than 200, preferably more than 300 and more preferably more than 400 $cm^3/m^2/d$.

The polyethylene film has further excellent mechanical properties.

The polyethylene film preferably has a tensile modulus (1% secant) in transverse direction (TD) of at least 1000 MPa, more preferably at least 1200, even more preferably at least 1500, still more preferably at least 1700 and most preferably at least 1800 MPa, determined according to ASTM D882. Usually, the tensile modulus (1% secant) in transverse direction (TD) is not more than 3200, preferably not more than 3000 and most preferably not more than 2800 MPa.

The polyethylene film preferably has a tensile stress at yield in transverse direction (TD) of at least 26 MPa, more preferably at least 28, even more preferably at least 30, still more preferably at least 31 and most preferably at least 32 MPa, determined according to ISO 527-3. Usually, the tensile stress at yield in transverse direction (TD) is less than 200, preferably less than 180 and more preferably less than 160 MPa.

The polyethylene film preferably has a tensile strength (also tensile stress at break) in transverse direction (TD) of at least 14 MPa, more preferably at least 15 MPa, still more preferably at least 16 and most preferably at least 17 MPa, determined according to ISO 527-3. Usually, the tensile strength in transverse direction (TD) is less than 100, preferably less than 90 and more preferably less than 80 MPa.

### *Preparation of the polyethylene film*

The primary (multilayer) film may be produced by any conventional method for producing films, such as blown films or a cast films. Any of the polyethylene compositions described above may be extruded preferably at a temperature of from 180 to 230°C, more preferably from 200 to 220°C. Conventional multilayer film extrusion techniques used in this regard are known in the art. Preferably, all film layers are coextruded at a temperature in the range of from 200 to 215°C in the extruder zones and passed through the annular die at the temperatures of from 195 to 220°C and then cooled by blowing air at a temperature of from 14 to 16°C, to provide a frost line height of from 0.5 to 3 times the diameter of the die. The blow up ratio can be in the range of from 1:1.5 to 1:3.5, preferably from 1:1.8 to 1:3.3, more preferably from 1:2.0 to 1:3.2.

One production method is described in detail in the Example section herein. Blown film extrusion and stretching techniques used for the examples are done on Reifenhauser MDO line well known in the art, as described in EP-2849929.

Preferably primary film with a thickness range of from 80 to 250 $\mu$m, more preferably from 90 to 225 $\mu$m and most preferably from 100 to 200 $\mu$m are thus prepared.

It is preferred, that the primary film is a blown film that is stretched majorly in one direction, referred to as uniaxially oriented film or monoaxially oriented film. Most preferably, the primary film is stretched in the machine direction (MD). Stretching may be carried out by any conventional technique using any conventional stretching devices which are well known in the art.

Selection of the thickness of the primary multilayer film before orientation may depend on the draw or stretch ratio and the desired final thickness of the oriented polyethylene films. The primary multilayer film may be stretched at least 3 times, such as from 3 to 20 times to its original length in the machine direction. Most preferred films of the invention are stretched in a draw ratio of from 1:4 to 1:8. The obtained thickness of the oriented film is preferably in the range of up to 40 $\mu$m, such as in the range of from 10 to 40 $\mu$m, more preferably from 12 to 35 $\mu$m, and most preferably from 15 to 30 $\mu$m.

*Laminates, Articles and Use*

The present invention further relates to laminates and articles comprising the polyethylene film according to any one of the embodiments as described herein. Preferably, the article is a packaging material, more preferably a flexible packaging material.

Lamination is preferably done by laminating the polyolefin film to a second polymeric film, preferably a sealant film. Preferably, the second polymeric film is laminated to the outer surface layer (O) of the polyethylene film.

In one embodiment, the laminate comprises a sealant film, wherein the sealant film is made of a polyolefin composition, preferably a polyethylene composition as defined above. If the polyethylene film of the invention is laminated to a polyethylene sealant film, it provides 100% recyclable (monomaterial) packaging structure.

Preferably, the article is a pouch, preferably a stand-up pouch, a bag or a premade package. Such pouches and bags can be useful for powder and grain pouches holding, for example, 50 g to 25 kg of the respective contents.

The present invention further relates to a food package comprising the polyethylene film or the laminate according to any one of the embodiments as described herein.

Finally, the present invention relates to the use of the polyolefin film or the laminate according to any one of the embodiments described herein for packaging of articles.

The films and laminates according to the present invention may be employed in a wide variety of end applications however they are of particular interest in the manufacture of packaging, especially food, drink or packaging of goods in medium duty or heavy duty shipping sacks.

A number of packaging examples can be produced with the films and laminates according to the present invention in different applications, such as packing of detergent or washing powders, pet foods, or regular consumer goods packaging like wheat, rice, food grains, wheat flour, salt and sugar packaging.

In particular the films may be utilized in form, fill and seal packaging technology or in the formation of stand up pouches. For example, a uniaxially oriented film having high stiffness and clarity, can be laminated to a stiff, polyethylene-rich blown film, and the laminate can be used to form a stand-up pouch formed entirely from polyethylene.

The films according to the present invention having excellent stiffness and heat resistance, combined with good optical and barrier properties may be used in several applications as they are advantageous over conventional MDO films and run smoothly on the vertical Form, Fill & Seal (FFS) packaging line, where superior stiffness of the inventive films plays an important role to run at a faster packaging speed.

In the following, the invention will further be illustrated by way of examples, which refer to the following figures:

Figure 1 illustrates the layer structure of the polyethylene films.

Figure 2 shows the results obtained for the tensile strength and tensile modulus (1% secant), both in machine direction (MD) and transverse direction (TD), of the polyethylene films.

Figure 3 shows the measured gloss and haze of the polyethylene films.

Figure 4 is a plot of the heat seal initiation temperature (SIT) curves of the polyethylene films.

*Measurement and Determination Methods*

The following definitions of terms and measurement and determination methods apply to the above general description of the invention as well as to the below examples, unless otherwise indicated. Measurements on the uniaxially oriented film in the examples were performed at a film thickness of 20.5 $\mu$m, unless otherwise indicated.

a) Measurement of melt flow rate MFR

The melt flow rate (MFR) was determined according to ISO 1133 and was indicated in g/10min. The higher the melt flow rate, the lower the viscosity of the polymer. The MFR is determined at 190°C for polyethylene and at a loading of 2.16 kg ($MFR_2$), 5.00 kg ($MFR_5$) or 21.6 kg ($MFR_{21}$).

The quantity FRR ((melt) flow rate ratio) is an indication of molecular weight distribution and denotes the ratio of flow rates at different loadings. Thus, $FRR_{21/5}$ denotes the value of $MFR_{21}/MFR_5$ and $FRR_{21/2}$ denotes the value of $MFR_{21}/MFR_2$.

**b)** Density

Density of the polymer was measured according to ISO 1183-1:2004 (method A) on compression moulded specimen prepared according to EN ISO 1872-2 (Feb 2007) and is given in kg/m$^3$.

**c)** GPC

*(1) GPC conventional method*

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i x\, M_i)}{\sum_{i=1}^{N} A_i} \quad (2)$$

$$M_z = \frac{\sum_{i=1}^{N}(A_i \times M_i^2)}{\sum_{i=1}^{N}(A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain)) or differential refractometer ((RI) from Agilent Technologies, equipped with 3 x Agilent-PLgel Olexis and 1x Agilent-PLgel Olexis Guard columns) was used. As mobile phase 1,2,4-trichlorobenzene (TCB) stabilized with 250 mg/L 2,6-Di tert-butyl-4-methylphenol) was used. The chromatographic system was operated at column temperature of 160°C and detector at 160°C and at a constant flow rate of 1 mL/min. 200 μL of sample solution was injected per analysis. Data collection was performed using either Agilent Cirrus software version 3.3 or PolymerChar GPC-IR control software.

The column set was calibrated using 19 narrow MWD polystyrene (PS) standards in the range of from 0.5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

A third order polynomial fit was used to fit the calibration data.

All samples were prepared in the concentration range of around 1 mg/ml and dissolved at 160°C for 3 (three) hours for PE in fresh distilled TCB stabilized with 250 ppm Irgafos168 under continuous gentle shaking.

*(2) GPC viscosity method*

Molecular weight averages ($M_z$, $M_w$ and $M_n$), molecular weight distribution (MWD) of LDPE is measured by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methylphenol) as mobile phase at 160°C and at a constant flow rate of 1 mL/min was applied. 200 μL of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm$^3$/g.

The column set was calibrated using universal calibration (according to ISO 16014-2:2019) with at least 15 narrow MWD polystyrene (PS) standards in the range of from 0.5 kg/mol to 11600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample (M$_2$) at each chromatographic slice using the universal calibration approach can be calculated by following correlation:

$$logM_1[\eta_1] = V_R = logM_2[\eta_2]$$

with: M$_1$ Molar mass of PS

$\eta_1$ intrinsic viscosity of the PS
M$_2$ Molar mass of sample
$\eta_2$ intrinsic viscosity of sample
V$_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160°C) of stabilized TCB (same as mobile phase) for 2.5 hours for PP or 3 hours for PE at max. 160°C under continuous gentle shaking.

**d)** Comonomer content

The comonomer content was measured as indicated in WO2019081611, pages 31 to 34.

**e)** Mechanical Properties

*(1) Tensile Modulus*

Film tensile properties were measured at 23°C according to ISO 527-3 with a specimen Type 2 using MDO film of 20.5 μm thickness.

Tensile modulus in machine direction (MD) and in transverse direction (TD) were measured as 1% secant modulus with 5 mm/min test speed and 50 mm gauge length according to ASTM D882.

*(2) Tensile Stress at Break*

Tensile stress at break (also known as tensile strength) in machine direction (MD) and in transverse direction (TD) were measured according to ISO 527-3 specimen Type 2 with 50 mm gauge length and 500 mm/min test speed.

*(3) Tensile Stress at Yield*

Tensile stress at yield in machine direction (MD) and in transverse direction (TD) were measured according to ISO 527-3.

*(4) Elongation at Yield*

Elongation at yield in machine direction (MD) and in transverse direction (TD) were measured according to ISO 527-3.

*(5) Elongation at Break*

Elongation at break in machine direction (MD) and in transverse direction (TD) were measured according to ISO 527-3.

*(6) Elmendorf Tear Strength*

Elmendorf tear strength in machine direction (MD) and in transverse direction (TD) were measured according to ASTM D1922.

*(7) Dart Drop Impact*

Dart drop impact was measured according to ASTM D1709 Method A.

**f)** Friction Parameters

Static coefficient of friction (in/in or I/I), dynamic coefficient of friction (in/in or I/I), static coefficient of friction (out/out or O/O) and dynamic coefficient of friction (out/out or O/O) were measured according to ISO 8295.

**g)** Optical Properties

*(1) Gloss*

Gloss was determined according to ISO 2813.

Gloss of the inner surface layer (I) (i.e. on the film surface of the inner side of the film) was determined according to ISO 2813 at an angle of 60°. As per ISO 2813, three measurement angles (20°, 60° and 85°) can be used by BYK-Gardner Micro-TRI-Gloss Meter and gloss values at 60° were recorded and reported as gloss units (GU).

*(2) Haze*

Haze was determined according to ASTM D1003.

**h)** Barrier Properties

*(1) Water Vapor Transmission Rate (WVTR)*

Water vapor transmission rates were determined under tropical conditions (37.8°C, 90% RH) according to ASTM F-1249:2006. Alternatively, the water vapor transmission rates may be determined according to ISO15106-2:2003 at the same conditions.

*(2) Oxygen Transmission Rate (OTR)*

Oxygen transmission rates were measured by ASTM D3985 using a pressure sensor method at standard conditions (23°C, 100% $O_2$, 0% RH). OTR were measured in a chamber, where first both sides of the film were evacuated and then oxygen was slowly let to the other side and the gas sensor measures the content from the vacuum side.

**i)** Heat Seal Parameters

The seal initiation temperature at 5N force and the maximum seal force were determined according to ASTM F2029 and ASTM F88. Generally, heat seal is formed by bonding two (polymeric) films in the way that surfaces are pressed together into a close contact while being at least partially molten. These test standards also cover the evaluation part after the heat seal process is performed. The force required to separate a test strip of material containing the seal is measured using UTM. Following the ASTM F2029 and ASTM F88 standards, a tested specimen with a film thickness of 20.5 $\mu$m (produced as described below in the Examples section) was tested, where the sealed surfaces of the film (inner surface layer (I)) where selected. For testing, a minimum of five specimens shall be used for each seal temperature. The term "seal initiation temperature" (SIT) is specified as the "heat seal initiation temperature at 5N" and it refers to the temperature at which a seal is formed that will have a strength of 5N after cooling. This temperature is a temperature at which a heat seal forms immediately after the sealing operation (sealing time 1.0 seconds, sealing pressure 3 bar), the strength of the heat seal being measured at a specified time interval (at least 24 h after completion of the sealing cycle and after the seal has cooled to ambient temperature and reached maximum strength).

***Examples***

1) Preparation of films

Uniaxially oriented polyethylene films were produced by preparing five-layer blown films and stretching the films, as described below.

*a) Preparation of five-layer polyethylene films (primary films)*

One comparative film (Comparative Example CE1) and the film in accordance with the invention (Inventive Example IE1) were produced as five-layer blown films.

Table 1 provides the structures of the comparative film (CE1) and then inventive film (IE1), comprising a 5-layer structure having an inner surface layer (I), a sub-inner surface layer (11), a core layer (C), a sub-outer surface layer (O1) and an outer surface layer (O). All percentages in Table 1 are wt.%, based on the total weight of the respective layer.

Table 1:

| Extruder Number | Comparative Example (CE1) | | Inventive Example (IE1) | |
|---|---|---|---|---|
| | Layers, Thickness | | Layers, Thickness | |
| 1 | O - 13 $\mu$m | 89% FB1350 + 10% FT6230 + 1% AMF705HF | O - 13 $\mu$m | 74% FB1350 + 25% FK1820 + 1% AMF705HF |
| 2 | O1 - 32 $\mu$m | 90% FB1350 + 10% FT6230 | O1 - 34 $\mu$m | 100% FB5600 |
| 3 | C - 18 $\mu$m | 90% FB1350 + 10% FT6230 | C - 16 $\mu$m | 75% FB1350 + 25% FK1820 |
| 4 | I1 - 13 $\mu$m | 90% FB1350 + 10% FT6230 | I1 - 13 $\mu$m | 95% FB1350 + 5% FK1820 |
| 5 | I - 34 $\mu$m | 89% FB1350 + 10% FT6230 + 1% AMF705HF | I - 34 $\mu$m | 99% FB5600 + 1% AMF705HF |
| Overall density of the film | 934.7 kg/m³ | 949.6 kg/m³ | | |

Polybatch® AMF705HF is a polymer processing aid, commercially available from A. Schulman.

The polymers used for making the film structures of the invention and of the comparative example are given in Table 2 below.

Table 2:

| | MFR$_2$ | MFR$_5$ | MFR$_{21}$ | Density kg/m³ | MWD* M$_w$/M$_n$ | Mn kg/mol | Mw kg/mol | MFR$_{21}$/MFR$_2$ ratio |
|---|---|---|---|---|---|---|---|---|
| Anteo FK1820 | 1.5 | 3.8 | 30 | 918 | 3.0-5.0 | 15-25 | 80-115 | 15-25 |
| Borstar FB1350 | 0.15 | 0.6 | 16 | 935 | 10-35 | 8-12 | 150-280 | 60-150 |
| Borstar FB5600 | 0.7 | 2.5 | 42 | 960 | 10-15 | 7-12 | 90-165 | 40-80 |
| FT6230 | 2.0 | - | - | 923 | 5-9 | 12-18 | 80-130 | - |
| *MWD, M$_n$ and M$_w$ of Borstar and Anteo products were measured by the GPC conventional method; MWD, M$_n$ and M$_w$ of FT6230 were measured by the GPC viscosity method (universal calibration). | | | | | | | | |

Primary blown films with a thickness of 110 $\mu$m were produced on a Reifenhauser ultra-stretch film line (with internal bubble cooling system - IBC) having an output of 503 kg/hr. The details are listed in Table 3 below.

Table 3:

| Blown film line parameters | |
|---|---|
| Die diameters | 500 mm |
| Die gap | 1.8 mm |
| Blow up ratio (BUR) | 2.1:1 |

(continued)

| Blown film line parameters | |
|---|---|
| Bubble cooling | IBC |
| Cooling air temperature | 14 to 16°C |
| Corona treatment | 44 dyne/cm |

Table 4 lists the melt temperatures used for the different layers of the blown film extruders and respective melt pressure. Each extruder used a slightly different process condition in order to optimize the processability and stable production of the films.

Table 4:

| | CE1 | IE1 |
|---|---|---|
| Outer surface layer (O) extruder <br> Melt temperature (°C) <br> Melt pressure (bar) | 210 <br> 435 | 206 <br> 421 |
| Sub-outer surface layer (O1) extruder <br> Melt temperature (°C) <br> Melt pressure (bar) | 210 <br> 490 | 214 <br> 480 |
| Core layer (C) extruder <br> Melt temperature (°C) <br> Melt pressure (bar) | 209 <br> 350 | 208 <br> 341 |
| Sub-inner surface layer (11) extruder <br> Melt temperature (°C) <br> Melt pressure (bar) | 211 <br> 406 | 212 <br> 411 |
| Inner surface layer (I) extruder <br> Melt temperature (°C) <br> Melt pressure (bar) | 210 <br> 462 | 212 <br> 403 |
| Die temperature (°C) | 220 | 220 |

The temperature profiles of the blown film line (in °C), i.e. the temperatures used for different locations of the blown film lines, were as given in Tables 5 and 6.

Table 5:

| Layers Comparative Example CE1 | Extruder zone 1 | Extruder zone 2 | Extruder zone 3 | Extruder zone 4 | Post Extruder zone 7 | Post Extruder zone 8 | | |
|---|---|---|---|---|---|---|---|---|
| Outer surface layer (O) | 200 | 205 | 205 | 205 | 205 | 205 | | |
| Sub-outer surface layer (O1) | 200 | 205 | 205 | 205 | 205 | 205 | | |
| Core layer (C) | 200 | 205 | 205 | 205 | 205 | 205 | | |
| Sub-inner surface layer (I1) | 200 | 205 | 205 | 205 | 205 | 205 | | |
| Inner surface layer (I) | 200 | 205 | 205 | 205 | 205 | 205 | | |
| Die (zones) | | zone 2 | zone 3 | zone 4 | zone 5 | zone 6 | zone 7 | zone 8 |

(continued)

| Layers Comparative Example CE1 | Extruder zone 1 | Extruder zone 2 | Extruder zone 3 | Extruder zone 4 | Post Extruder zone 7 | Post Extruder zone 8 | | |
|---|---|---|---|---|---|---|---|---|
| Die | - | 195 | 220 | 220 | 220 | 220 | 220 | 220 |

Table 6:

| Layers Inventive Example IE1 | Extruder zone 1 | Extruder zone 2 | Extruder zone 3 | Extruder zone 4 | Post Extruder zone 7 | Post Extruder zone 8 | | |
|---|---|---|---|---|---|---|---|---|
| Outer surface layer (O) | 200 | 205 | 205 | 205 | 205 | 205 | | |
| Sub-outer surface layer (O1) | 205 | 215 | 215 | 215 | 215 | 215 | | |
| Core layer (C) | 200 | 205 | 205 | 205 | 205 | 205 | | |
| Sub-inner surface layer (I1) | 200 | 205 | 205 | 205 | 205 | 205 | | |
| Inner surface layer (I) | 205 | 215 | 215 | 215 | 215 | 215 | | |
| Die (zones) | | zone 2 | zone 3 | zone 4 | zone 5 | zone 6 | zone 7 | zone 8 |
| Die | - | 195 | 220 | 220 | 220 | 220 | 220 | 220 |

*b) Preparation of uniaxially directed polyethylene films*

Uniaxially-oriented, in the present case in the machine direction oriented (MDO) films, were prepared from the above described primary films.

The MDO films were produced by orienting, i.e. stretching, the non-oriented primary films by a certain stretch ratio to achieve the final thickness of the MDO film. This orientation can generally take place both in in-line and off-line stretching lines, however in-line stretching was used for the present examples. The primary film obtained from blown film extrusion was pulled into the machine direction and then stretched between two sets of nip rollers where the second pair ran at higher speed than the first pair resulting in the desired stretch ratio. The oriented or stretched film was then annealed by holding the film at an elevated temperature for a period of time to allow for stress relaxation. The temperature of the annealing thermal rollers is generally from about 100°C to about 125°C and the annealing time is from about 1 to about 2 seconds. Finally, the film was cooled by contacting the film with rollers that were at ambient temperature. The process steps of the film preparation are commonly known and may be carried out in one film line in a manner known in the art. Such film lines are commercially available, for example from Windmoller & Holscher, Reifenhauser, Hosokawa Alpine. Blown film extrusion and stretching techniques used for these examples were done on Reifenhauser MDO line art, as described in EP-2849929.

In detail, stretching of the examples CE1 and IE1 was carried out, which consisted of preheating, drawing, annealing and cooling step, with each step being at specific temperature to optimize the performance of the unit and produce films with the desired properties. The heating was done in the range of from 95°C to 115°C, the stretching was done at 115°C, annealing and cooling was done at 110°C down to 40°C. After exiting the stretching machine the film was fed into a conventional film winder where the film was slit to its desired width and wound to form reels. The process resulted in an MDO film with a thickness of 20.5 $\mu$m, corresponding to a stretch ratio of 1:5.35 (thickness of the primary film was 110 $\mu$m).

2) Results

Properties of the MDO films and the respective method used for their determination are summarized in Table 7 below.

Table 7:

| Properties | | Method | CE1 | IE1 |
|---|---|---|---|---|
| Thickness (μm) | | | 20.5 | 20.5 |
| Tensile Modulus (1% secant modulus), MPa | | ASTM D882 | | |
| | MD | | 1060 | 2270 |
| | TD | | 945 | 1950 |
| Tensile Stress at Yield, Mpa | | ISO 527-3 | | |
| | MD | | 136 | 239 |
| | TD | | 25.5 | 39.6 |
| Elongation at Yield, % | | ISO 527-3 | | |
| | MD | | 25.2 | 22.7 |
| | TD | | 4.9 | 2.7 |
| Tensile Stress at Break, Mpa | | ISO 527-3 | | |
| | MD | | 121.3 | 226 |
| | TD | | 13.5 | 19.7 |
| Elongation at Break, % | | ISO 527-3 | | |
| | MD | | 85.1 | 40.4 |
| | TD | | 169.2 | 92.8 |
| Elmendorf Tear Strength, N | | ASTM D1922 | | |
| | MD | | 1.51 | 1.09 |
| | TD | | 3.48 | 2.44 |
| Dart Drop Impact, g | | ASTM D1709 Method A | <48 | <48 |
| Haze, % | | ASTM D1003 | 16.6 | 11.1 |
| Gloss at 60° (inner surface layer (I)) | | ISO 2813 | 31.5 | 93.2 |
| Static Coefficient of Friction (in/in or I/I) | | ISO 8295 | 0.38 | 0.27 |
| Dynamic Coefficient of Friction (in/in or I/I) | | ISO 8295 | 0.36 | 0.26 |
| Static Coefficient of Friction (out/out or O/O) | | ISO 8295 | 0.37 | 0.31 |
| Dynamic Coefficient of Friction (out/out or O/O) | | ISO 8295 | 0.35 | 0.30 |
| Heat Seal of layer I | | ASTM F2029, ASTM F88 | | |
| Seal Initiation Temperature at 5N | | | 120.0 | 130.1 |
| force, °C | | | | |
| Maximum Seal Force, N | | | 13.9 | 17.2 |
| WVTR, g/m$^2$/day | ASTM F1249 | | 8.72 | 5.14 |
| OTR, cm$^3$/m$^2$/day | ASTM D3985 | | 2907 | 1848 |

As shown in Table 7, the film according to the invention IE1 shows superior behavior over the film of the comparative example CE1 in terms of improved mechanical properties (tensile modulus), improved optical properties (haze and gloss) and higher heat resistance (through heat seal initiation temperature at 5N) as well as improved barrier properties (WVTR and OTR).

a) Mechanical Properties

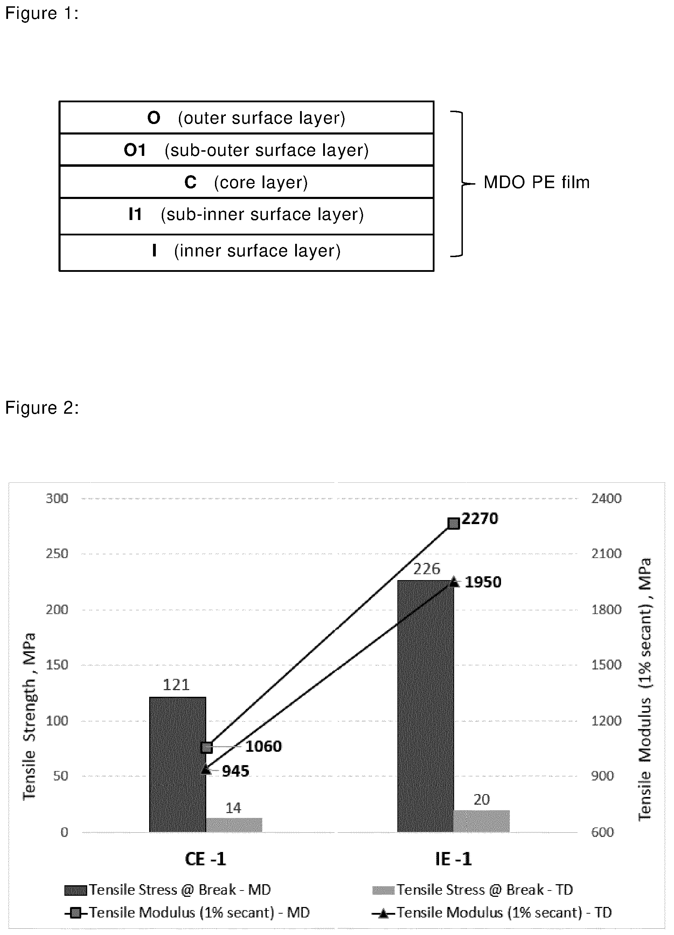

Referring to Figure 2, which illustrates tensile strength and tensile modulus (1% secant) in both in machine direction (MD) and transverse direction (TD), extremely high tensile modulus (1% secant) of more than 2000 MPa in machine direction (MD) was reached by the inventive MDO film. Also high tensile strength (i.e. tensile stress at break) in machine direction (MD) of more than 200 MPa is shown for the inventive film. Both parameters are significantly improved when compared to the comparative film. Also the tensile strength and tensile modulus (1% secant) in transverse direction (TD) were improved in the inventive film. These results are reached due to incorporation of the multimodal HDPE component. Possibly, incorporation of the multimodal MDPE component provides further improvement.

*b) Optical Properties*

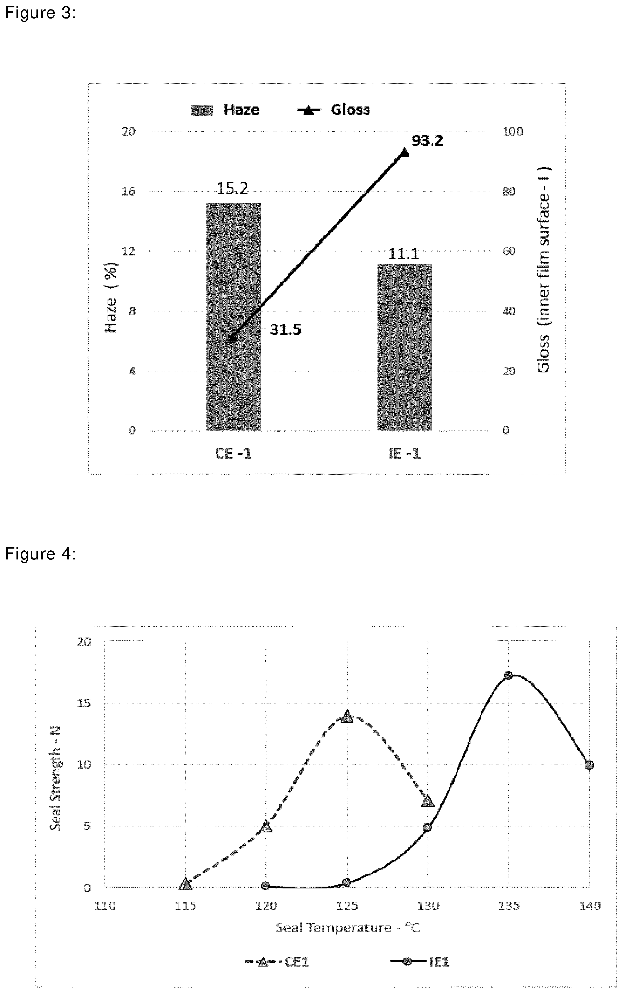

As is depicted in Table 7 and illustrated in Figure 3, haze of the film and gloss (at 60°) at the inner surface layer (I) are improved in the inventive film. Haze of the inventive film is at 11.1% vs. 16.6% in the comparative film. Gloss is at 93.2 at the inner surface layer (I) of the inventive film, and thus about 3 times higher than gloss in the respective layer of the comparative example.

The optical properties of the film according to the invention are very good and are well suited for the majority of packaging applications.

For the use of MDO polyethylene films as substrate, often printing is performed on the outer surface layer (O) of the MDO film after surface treatment (corona treatment of from 42 to 44 dyne/cm). Then it is used as a reverse printed substrate. Therefore, for the inner surface layer (I) of the film, it is important to have a high gloss value, which is connected with aesthetic appearance in all packaging applications.

*c) Seal Initiation Temperature*

The heat seal initiation temperatures (also heat resistance) have been determined for the inner surface layer (I) of the inventive and comparative example and the data are illustrated in Figure 4, showing the heat seal curves.

As may easily be seen in the heat seal curves of Figure 4, the film according to the invention (IE1) has a significantly higher heat seal initiation temperature at 5N than the film of the comparative example (CE1) (130.1 vs 120°C). This very high heat seal initiation temperature of the inventive film is one of the best results obtained for polyethylene films used in the packaging industry. The heat seal initiation temperatures of the inner surface layer (I) is very important for the films which are intended to be used as substrates in any packaging application. The high heat seal initiation temperature at 5N indicates that the film has enhanced capability to withstand higher temperature during subsequent use in printing, lamination and while running on the Form, Fill & Seal (FFS) lines to facilitates better packaging speed.

*d) Barrier properties*

As depicted in Table 7, improved barrier performance was obtained for the inventive example vs the comparative example. Both, water vapour transmission rate WVTR (37.8°C; 90% RH) and oxygen transmission rate OTR (23°C; 100% $O_2$; 0% RH) were reduced in the example according to the invention by about 40%. These results also satisfy the requirements of packaging products with respect to barrier properties.

**Claims**

1. A uniaxially oriented polyethylene film, comprising multiple layers including an inner surface layer (I), an outer surface layer (O) and a core layer (C), wherein at least one of the multiple layers is made of a composition comprising from 70 to 100 wt.% of a multimodal high density polyethylene (HDPE) polymer component (PE1), based on the total weight of the respective layer composition, the PE1 component having:

   a) a melt flow rate $MFR_2$ of from 0.1 to 2.0 g/10min;
   b) a melt flow rate $MFR_5$ of from 1.0 to 5.0 g/10min;
   c) a melt flow rate ratio ($MFR_{21}/MFR_2$) of from 30 to 90, the melt flow rates being determined according to ISO 1133;
   d) a density of more than or equal to 950 kg/m$^3$ (measured as defined in the description); and
   e) a molecular weight distribution ($M_w/M_n$) of from 8 to 20, determined according to ISO 16014; and
   wherein the polyethylene film has a tensile modulus (1% secant) in machine direction (MD) of at least 1500 MPa, determined according to ASTM D882, and a tensile strength in machine direction (MD) of at least 160 MPa, determined according to ISO 527-3, and
   wherein the PE1 component is an ethylene copolymer which comprises ethylene monomer and one or more comonomer(s) selected from the group consisting of alpha-olefins having 4 to 12 carbon atoms.

2. The polyethylene film according to claim 1, wherein at least one of the multiple layers is made of a composition comprising from 5 to 30 wt.% of a linear low density polyethylene (LLDPE) component (PE2), preferably a multimodal copolymer, based on the total weight of the respective layer composition; wherein the PE2 component preferably has a density of from 910 to 925 kg/m$^3$.

3. The polyethylene film according to any one of the preceding claims, wherein the PE1 component comprises:

   a lower molecular weight (LMW) component and a higher molecular weight (HMW) component;
   wherein the LMW component is an ethylene homopolymer having a density of from 965 to 975 kg/m$^3$ and the HMW component is an ethylene copolymer of ethylene with at least one C$_4$ to C$_{12}$ alpha-olefin, having a density of from 935 to 955 kg/m$^3$.

4. The polyethylene film according to any one of the preceding claims, wherein at least one of the multiple layers is made of a composition comprising from 60 to 100 wt.% of a multimodal polyethylene component (PE3), based on the total weight of the respective layer composition, having a density of from 925 to 945 kg/m$^3$, and preferably a melt flow rate (MFR$_2$) of from 0.05 to 0.5 g/10min, and preferably a melt flow rate ratio (MFR$_{21}$/MFR$_2$) of from 60 to 150, the melt flow rates being determined according to ISO 1133, and preferably a molecular weight distribution (M$_w$/M$_n$) of from 10 to 35, determined according to ISO 16014.

5. The polyethylene film according to any one of the preceding claims, wherein the content of the PE1 component in the polyethylene film is in the range of from 35 to 80 wt.%; and/or the content of the PE3 component in the polyethylene film is in the range of from 10 to 50 wt.%, based on the total weight of the polyethylene film.

6. The polyethylene film according to any one of the preceding claims, wherein the inner surface layer (I) and/or the outer surface layer (O) are made of a composition comprising from 70 to 100 wt.% of the PE1 component, based on the total weight of the composition.

7. The polyethylene film according to any one of the preceding claims, wherein the inner surface layer (I) is made of a composition comprising from 90 to 100 wt.% of the PE1 component, preferably from 95 to 100 wt.%, more preferably from 98 to 100 wt.% and most preferably from 99 or 100 wt.% of the PE1 component, based on the total weight of the composition of the inner surface layer (I); and/or the core layer (C) is made of a composition comprising from 60 to 100 wt.% of the PE3 component and from 0 to 40 wt.% of the PE2 component and/or the PE1 component, based on the total weight of the composition of the core layer (C).

8. The polyethylene film according to any one of the preceding claims, wherein the outer surface layer (O) is made of a composition comprising from 70 to 90 wt.% of the PE3 component and from 10 to 30 wt.% of the PE2 component; or a composition comprising from 90 to 100 wt.% of the PE1 component, preferably from 95 to 100 wt.%, more preferably from 98 to 100 wt.% and most preferably from 99 to 100 wt.% of PE1 component, based on the total weight of the composition of the outer surface layer (O).

9. The polyethylene film according to any one of the preceding claims, which is a five-layered film further comprising a sub-inner surface layer (I1) and a sub-outer surface layer (O1), and wherein the sub-inner surface layer (I1) is between the inner surface layer (I) and the core layer (C), and the sub-outer surface layer (O1) is between the outer surface layer (O) and the core layer (C), and, preferably, the outer surface layer (O) is made of the same composition as the inner surface layer (I) and/or the sub-outer surface layer (O1) is made of the same composition as the sub-inner surface layer (11).

10. The polyethylene film according to any one of the preceding claims, having:

    a) a haze of less than 14%, determined according to ASTM D1003; and/or
    b) a gloss at 60° of the inner surface layer (I) of at least 80, determined according to ISO 2813; and/or
    c) a seal initiation temperature (SIT) of at least one of the inner surface layer (I) or the outer surface layer (O) of greater than or equal to 125°C, determined according to ASTM F2029 and ASTM F88; and/or
    d) a water vapor transmission rate (WVTR) of less than 10 g/m$^2$/d determined according to ASTM F1249; and/or
    e) an oxygen transmission rate (OTR) of less than 2500 cm$^3$/m$^2$/d, determined according to ASTM D3985.

11. The polyethylene film according to any one of the preceding claims, wherein the polyethylene film has an overall thickness of up to 40 $\mu$m and comprises up to nine layers and/or wherein the polyethylene film has an overall density of from 935 to 965 kg/m$^3$.

12. A laminate or an article comprising the polyethylene film according to any one of the preceding claims, wherein the article is a packaging material.

13. The laminate according to claim 12, wherein the laminate comprises a sealant film and the sealant film is made of a polyethylene composition.

14. Use of the polyethylene film according to any one of claims 1 to 11 or the laminate according to any one of claims 12 or 13 for packaging of articles.

15. A food package comprising the polyethylene film according to any one of claims 1 to 11 or the laminate according to any one of claims 12 or 13.


**Patentansprüche**

1. Uniaxial verstreckte Polyethylenfolie, die mehrere Schichten umfasst, einschließlich einer inneren Oberflächenschicht (I), einer äußeren Oberflächenschicht (O) und einer Kernschicht (C),

    wobei mindestens eine der mehreren Schichten aus einer Zusammensetzung hergestellt ist, die 70 bis 100 Gew.-% einer multimodalen hochdichten Polyethylen (HDPE)-Polymerkomponente (PE1) umfasst, bezogen auf das Gesamtgewicht der jeweiligen Schichtzusammensetzung, wobei die PE1-Komponente Folgendes aufweist:

    a) eine Schmelzflussrate MFR$_2$ von 0,1 bis 2,0 g/10 min;
    b) eine Schmelzflussrate MFR$_5$ von 1,0 bis 5,0 g/10 min;
    c) ein Schmelzflussratenverhältnis (MFR$_{21}$/MFR$_2$) von 30 bis 90, wobei die Schmelzflussraten gemäß ISO 1133 bestimmt werden;
    d) eine Dichte von mehr als oder gleich 950 kg/m$^3$ (gemessen wie in der Beschreibung definiert); und
    e) eine Molekulargewichtsverteilung (M$_w$/M$_n$) von 8 bis 20, bestimmt gemäß ISO 16014, und

    wobei die Polyethylenfolie einen Zugmodul (1 % Sekante) in Maschinenrichtung (MD) von mindestens 1500 MPa, bestimmt gemäß ASTM D882, und eine Zugfestigkeit in Maschinenrichtung (MD) von mindestens 160 MPa, bestimmt gemäß ISO 527-3, aufweist, und
    wobei die PE1-Komponente ein Ethylencopolymer ist, das Ethylenmonomer und ein oder mehrere Comonomere umfasst, die aus der Gruppe ausgewählt sind, bestehend aus alpha-Olefinen mit 4 bis 12 Kohlenstoffatomen.

2. Polyethylenfolie nach Anspruch 1, wobei mindestens eine der mehreren Schichten aus einer Zusammensetzung hergestellt ist, die 5 bis 30 Gew.-% einer linearen niederdichten Polyethylen (LLDPE)-Komponente (PE2), vorzugsweise ein multimodales Copolymer, umfasst, bezogen auf das Gesamtgewicht der jeweiligen Schichtzusammensetzung, wobei die PE2-Komponente vorzugsweise eine Dichte von 910 bis 925 kg/m$^3$ aufweist.

3. Polyethylenfolie nach einem der vorangehenden Ansprüche, wobei die PE1-Komponente Folgendes umfasst:

    eine Komponente mit niedrigerem Molekulargewicht (LMW) und eine Komponente mit höherem Molekulargewicht (HMW);
    wobei die LMW-Komponente ein Ethylenhomopolymer ist, das eine Dichte von 965 bis 975 kg/m$^3$ aufweist, und die HMW-Komponente ein Ethylencopolymer aus Ethylen mit mindestens einem C$_4$ bis C$_{12}$-alpha-Olefin ist, das eine Dichte von 935 bis 955 kg/m$^3$ aufweist.

4. Polyethylenfolie nach einem der vorangehenden Ansprüche, wobei mindestens eine der mehreren Schichten aus einer Zusammensetzung hergestellt ist, die 60 bis 100 Gew.-% einer multimodalen Polyethylenkomponente (PE3) umfasst, bezogen auf das Gesamtgewicht der jeweiligen Schichtzusammensetzung, die folgendes aufweist: eine Dichte von 925 bis 945 kg/m$^3$ und vorzugsweise eine Schmelzflussrate (MFR$_2$) von 0,05 bis 0,5 g/10 min und vorzugsweise eine Schmelzflussratenverhältnis (MFR$_{21}$/MFR$_2$) von 60 bis 150, wobei die Schmelzflussraten gemäß ISO 1133 bestimmt werden, und vorzugsweise eine Molekulargewichtsverteilung (M$_w$/M$_n$) von 10 bis 35, bestimmt gemäß ISO 16014.

**5.** Polyethylenfolie nach einem der vorangehenden Ansprüche, wobei der Gehalt der PE1-Komponente in der Polyethylenfolie in dem Bereich von 35 bis 80 Gew.-% liegt; und/oder der Gehalt der PE3-Komponente in der Polyethylenfolie in dem Bereich von 10 bis 50 Gew.-% liegt, bezogen auf das Gesamtgewicht der Polyethylenfolie.

**6.** Polyethylenfolie nach einem der vorangehenden Ansprüche, wobei die innere Oberflächenschicht (I) und/oder die äußere Oberflächenschicht (O) aus einer Zusammensetzung hergestellt sind, die 70 bis 100 Gew.-% der PE1-Komponente umfasst, bezogen auf das Gesamtgewicht der Zusammensetzung.

**7.** Polyethylenfolie nach einem der vorangehenden Ansprüche, wobei die innere Oberflächenschicht (I) aus einer Zusammensetzung hergestellt ist, die 90 bis 100 Gew.-% der PE1-Komponente, vorzugsweise 95 bis 100 Gew.-%, noch bevorzugter 98 bis 100 Gew.-% und am meisten bevorzugt 99 oder 100 Gew.-% der PE1-Komponente umfasst, bezogen auf das Gesamtgewicht der Zusammensetzung der inneren Oberflächenschicht (I); und/oder die Kernschicht (C) aus einer Zusammensetzung hergestellt ist, die 60 bis 100 Gew.-% der PE3-Komponente und 0 bis 40 Gew.-% der PE2-Komponente und/oder der PE1-Komponente umfasst, bezogen auf das Gesamtgewicht der Zusammensetzung der Kernschicht (C).

**8.** Polyethylenfolie nach einem der vorangehenden Ansprüche, wobei die äußere Oberflächenschicht (O) aus einer Zusammensetzung hergestellt ist, die 70 bis 90 Gew.-% der PE3-Komponente und 10 bis 30 Gew.-% der PE2-Komponente umfasst; oder einer Zusammensetzung hergestellt ist, die 90 bis 100 Gew.-% der PE1-Komponente, vorzugsweise 95 bis 100 Gew.-%, noch bevorzugter 98 bis 100 Gew.-% und am meisten bevorzugt 99 bis 100 Gew.-% der PE1-Komponente umfasst, bezogen auf das Gesamtgewicht der Zusammensetzung der äußeren Oberflächenschicht (O).

**9.** Polyethylenfolie nach einem der vorangehenden Ansprüche, die eine fünfschichtige Folie ist, die ferner eine untere innere Oberflächenschicht (I1) und eine untere äußere Oberflächenschicht (O1) umfasst, wobei sich die untere innere Oberflächenschicht (I1) zwischen der inneren Oberflächenschicht (I) und der Kernschicht (C) angeordnet ist und die untere äußere Oberflächenschicht (O1) zwischen der äußeren Oberflächenschicht (O) und der Kernschicht (C) angeordnet ist, und wobei vorzugsweise die äußere Oberflächenschicht (O) aus der gleichen Zusammensetzung wie die innere Oberflächenschicht (I) hergestellt ist und/oder die untere äußere Oberflächenschicht (O1) aus der gleichen Zusammensetzung wie die untere innere Oberflächenschicht (I1) hergestellt ist.

**10.** Polyethylenfolie nach einem der vorangehenden Ansprüche, die Folgendes aufweist:

a) eine Trübung von weniger als 14 %, bestimmt gemäß ASTM D1003; und/oder

b) einen Glanz bei 60° von der inneren Oberflächenschicht (I) von mindestens 80, bestimmt gemäß ISO 2813; und/oder

c) eine Siegel-Anfangstemperatur (SIT) von mindestens einer der inneren Oberflächenschicht (I) oder der äußeren Oberflächenschicht (O) von größer oder gleich 125°C, bestimmt gemäß ASTM F2029 und ASTM F88; und/oder

d) eine Wasserdampfdurchlässigkeitsrate (WVTR) von weniger als 10 g/m$^2$/d, bestimmt gemäß ASTM F1249; und/oder

e) eine Sauerstoffdurchlässigkeitsrate (OTR) von weniger als 2500 cm$^3$/m$^2$/d, bestimmt gemäß ASTM D3985.

**11.** Polyethylenfolie nach einem der vorangehenden Ansprüche, wobei die Polyethylenfolie eine Gesamtdicke von bis zu 40 μm aufweist und bis zu neun Schichten umfasst und/oder wobei die Polyethylenfolie eine Gesamtdichte von 935 bis 965 kg/m$^3$ aufweist.

**12.** Laminat oder Artikel, der die Polyethylenfolie nach einem der vorangehenden Ansprüche umfasst, wobei der Artikel ein Verpackungsmaterial ist.

**13.** Laminat nach Anspruch 12, wobei das Laminat eine Dichtungsfolie umfasst und die Dichtungsfolie aus einer Polyethylenzusammensetzung hergestellt ist.

**14.** Verwendung der Polyethylenfolie nach einem der Ansprüche 1 bis 11 oder des Laminats gemäß einem der Ansprüche 12 oder 13 zum Verpacken von Artikeln.

**15.** Lebensmittelverpackung, die die Polyethylenfolie nach einem der Ansprüche 1 bis 11 oder das Laminat nach einem der Ansprüche 12 oder 13 umfasst.

**Revendications**

1. Film de polyéthylène à orientation uniaxiale, comprenant de multiples couches, dont une couche superficielle intérieure (I), une couche superficielle extérieure (O) et une couche d'âme (C), au moins l'une des multiples couches étant constituée d'une composition comprenant de 70 à 100 % en poids d'un composant polymère (PE1) de polyéthylène à haute densité (HDPE) multimodal, par rapport au poids total de la composition de couche respective, le composant PE1 ayant :

   a) un indice de fluidité à chaud $MFR_2$ de 0,1 à 2,0 g/10 min ;
   b) un indice de fluidité à chaud $MFR_5$ de 1,0 à 5,0 g/10 min ;
   c) un rapport d'indices de fluidité à chaud ($MFR_{21}/MFR_2$) de 30 à 90, les indices de fluidité à chaud étant déterminés conformément à la norme ISO 1133 ;
   d) une densité supérieure ou égale à 950 kg/m$^3$ (mesurée comme défini dans la description) ; et
   e) une distribution des masses moléculaire ($M_w/M_n$) de 8 à 20, déterminée conformément à la norme ISO 16014 ; et

   le film de polyéthylène ayant un module d'élasticité en traction (module sécant à 1 %) dans le sens machine (MD) d'au moins 1 500 MPa, déterminé conformément à la norme ASTM D882, et une résistance à la traction dans le sens machine (MD) d'au moins 160 MPa, déterminée conformément à la norme ISO 527-3, et le composant PE1 étant un copolymère d'éthylène qui comprend un monomère d'éthylène et un ou plusieurs comonomères choisis dans le groupe consistant en des alpha-oléfines ayant de 4 à 12 atomes de carbone.

2. Film de polyéthylène selon la revendication 1, au moins l'une des multiples couches étant constituée d'une composition comprenant de 5 à 30 % en poids d'un composant (PE2) de polyéthylène linéaire à basse densité (LLDPE), de préférence un copolymère multimodal, par rapport au poids total de la composition de couche respective ; le composant PE2 ayant de préférence une densité allant de 910 à 925 kg/m$^3$.

3. Film de polyéthylène selon l'une quelconque des revendications précédentes, le composant PE1 comprenant :

   un composant à masse moléculaire relativement faible (LMW) et un composant à masse moléculaire relativement élevée (HMW) ;
   le composant LMW étant un homopolymère d'éthylène ayant une densité de 965 à 975 kg/m$^3$ et le composant HMW étant un copolymère d'éthylène, d'un éthylène avec au moins une alpha-oléfine en $C_4$ à $C_{12}$, ayant une densité allant de 935 à 955 kg/m$^3$.

4. Film de polyéthylène selon l'une quelconque des revendications précédentes, au moins l'une des multiples couches étant constituée d'une composition comprenant de 60 à 100 % en poids d'un composant polyéthylène multimodal (PE3), par rapport au poids total de la composition de couche respective, ayant une densité de 925 à 945 kg/m$^3$, et de préférence un indice de fluidité à chaud ($MFR_2$) de 0,05 à 0,5 g/10 min, et de préférence un rapport d'indices de fluidité à chaud ($MFR_{21}/MFR_2$) de 60 à 150, les indices de fluidité à chaud étant déterminés conformément à la norme ISO 1133, et de préférence une distribution de masses moléculaire ($M_w/M_n$) de 10 à 35, déterminée conformément à la norme ISO 16014.

5. Film de polyéthylène selon l'une quelconque des revendications précédentes, la teneur en le composant PE1 dans le film de polyéthylène se situant dans la plage de 35 à 80 % en poids ; et/ou la teneur en le composant PE3 dans le film de polyéthylène se situant dans la plage de 10 à 50 % en poids, par rapport au poids total du film de polyéthylène.

6. Film de polyéthylène selon l'une quelconque des revendications précédentes, la couche superficielle intérieure (I) et/ou la couche superficielle extérieure (O) étant constituées d'une composition comprenant de 70 à 100 % en poids du composant PE1, par rapport au poids total de la composition.

7. Film de polyéthylène selon l'une quelconque des revendications précédentes, la couche superficielle intérieure (I) étant constituée d'une composition comprenant de 90 à 100 % en poids du composant PE1, de préférence de 95 à 100 % en poids, de manière plus préférée de 98 à 100 % en poids et de manière la plus préférée de 99 à 100 % en poids du composant PE1, par rapport au poids total de la composition de la couche superficielle intérieure (I) ; et/ou la couche d'âme (C) étant constituée d'une composition comprenant de 60 à 100 % en poids du composant PE3 et de 0 à 40 % en poids du composant PE2 et/ou du composant PE1, par rapport au poids total de la composition de la couche d'âme (C).

**8.** Film de polyéthylène selon l'une quelconque des revendications précédentes, la couche superficielle extérieure (O) étant constituée d'une composition comprenant de 70 à 90 % en poids du composant PE3 et de 10 à 30 % en poids du composant PE2 ; ou d'une composition comprenant de 90 à 100 % en poids du composant PE1, de préférence de 95 à 100 % en poids, et de manière plus préférée de 98 à 100 % en poids et de manière la plus préférée de 99 à 100 % en poids du composant PE1, par rapport au poids total de la composition de la couche superficielle extérieure (O).

**9.** Film de polyéthylène selon l'une quelconque des revendications précédentes, qui est un film à cinq couches comprenant en outre une sous-couche superficielle intérieure (I1) et une sous-couche superficielle extérieure (O1), et la sous-couche superficielle intérieure (I1) se trouvant entre la couche superficielle intérieure (I) et la couche d'âme (C), et la sous-couche superficielle extérieure (O1) se trouvant entre la couche superficielle extérieure (O) et la couche d'âme (C), et, de préférence, la couche superficielle extérieure (O) étant composée de la même composition que la couche superficielle intérieure (I) et/ou la sous-couche superficielle extérieure (O1) étant composée de la même composition que la sous-couche superficielle intérieure (I1).

**10.** Film de polyéthylène selon l'une quelconque des revendications précédentes, ayant :

a) un trouble inférieur à 14 %, déterminé conformément à la norme ASTM D1003 ; et/ou
b) une brillance à 60° de la couche superficielle intérieure (I) d'au moins 80, déterminée conformément à la norme ISO 2813 ; et/ou
c) une température d'initiation de scellage (SIT) d'au moins l'une de la couche superficielle intérieure (I) ou de la couche superficielle extérieure (O), supérieure ou égale à 125 °C, déterminée conformément aux normes ASTM F2029 et ASTM F88 ; et/ou
d) un coefficient de transmission de la vapeur d'eau (WVTR) inférieur à 10 g/m$^2$/d, déterminé conformément à la norme ASTM F1249 ; et/ou
e) un coefficient de transmission d'oxygène (OTR) inférieur à 2 500 cm$^3$/m$^2$/d, déterminé conformément à la norme ASTM D3985.

**11.** Film de polyéthylène selon l'une quelconque des revendications précédentes, le film de polyéthylène ayant une épaisseur totale de jusqu'à 40 μm et comprenant jusqu'à neuf couches et/ou le film de polyéthylène ayant une densité totale de 935 à 965 kg/m$^3$.

**12.** Stratifié ou article comprenant le film de polyéthylène selon l'une quelconque des revendications précédentes, l'article étant un matériau d'emballage.

**13.** Stratifié selon la revendication 12, le stratifié comprenant un film de scellage et le film de scellage étant constitué d'une composition de polyéthylène.

**14.** Utilisation du film de polyéthylène selon l'une quelconque des revendications 1 à 11 ou du stratifié selon l'une quelconque des revendications 12 ou 13 pour l'emballage d'articles.

**15.** Emballage alimentaire comprenant le film de polyéthylène selon l'une quelconque des revendications 1 à 11 ou le stratifié selon l'une quelconque des revendications 12 ou 13.

Figure 1:

| | |
|---|---|
| **O** (outer surface layer) | |
| **O1** (sub-outer surface layer) | |
| **C** (core layer) | MDO PE film |
| **I1** (sub-inner surface layer) | |
| **I** (inner surface layer) | |

Figure 2:

Figure 3:

Figure 4:

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006177641 A
- WO 2020109289 A
- WO 2016083208 A
- WO 2017021389 A1
- WO 2017055174 A
- EP 2849929 A
- WO 2019081611 A